# EUROPEAN PATENT APPLICATION

(11) **EP 4 669 021 A1**
(43) Date of publication of application: **24.12.2025**
(21) Application number: 24755860.4
(22) Date of filing: 15.01.2024
(51) Int. Cl.: H04W 76/27

(54) **DISCONTINUOUS TRANSMISSION DETERMINATION METHOD AND COMMUNICATION DEVICE**

(30) Priority: 17.02.2023 CN 202310131581
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); SU, Yuwan, Beijing 100085 (CN); YANG, Meiying, Beijing 100085 (CN)
(74) Representative: Studio Torta S.p.A.
(86) International application number: PCT/CN2024/072217
(87) International publication number: WO 2024/169485

(57) **Abstract**

The present disclosure relates to the technical field of communications, and provides a discontinuous transmission determination method and a communication device. A terminal side method comprises: a terminal determines at least one of an active period and an inactive period of discontinuous transmission of N cells on the basis of first information, N being an integer greater than or equal to 1.

## Description

This disclosure claims the priority of the Chinese patent application No. 202310131581.1 filed before the China Patent Office on February 17, 2023, with a title of "Discontinuous Transmission Determination Method And Communication Device", the disclosure of which is incorporated by reference herein in its entirety.

### TECHNICAL FIELD

The present disclosure relates to the field of communication technology, and in particular, to a method of determining discontinuous transmission and a communication device.

### BACKGROUND

In the related art, the terminal can perform discontinuous PDCCH monitoring on the serving cell according to pre-configured discontinuous transmission, such as discontinuous reception (DRX). In a DRX cycle, the terminal (User Equipment, UE) only monitors the physical downlink control channel (PDCCH) during the DRX active period (DRX-ON), and in the DRX inactivation period (DRX-OFF), the UE does not receive other PDCCHs except the scheduling broadcast signaling to reduce power consumption.

In the carrier aggregation (CA) scenario, the terminal can connect to multiple cells. If discontinuous transmission is applied to the CA scenario, the terminal cannot know how the network device performs discontinuous transmission in different cells, which causes the terminal to continuously monitor multiple cells, resulting in high power consumption of the terminal.

### SUMMARY

The embodiments of the present disclosure provide a method of determining discontinuous transmission and a communication device to solve the problem that in a CA scenario, a terminal cannot know how a network device performs discontinuous transmission in different cells, resulting in high power consumption of the terminal.

The present disclosure provides a method of determining discontinuous transmission, including: determining at least one of an activation period and an inactivation period of discontinuous transmission of N cells based on first information by a terminal, wherein N is an integer greater than or equal to 1.

The embodiment of the present disclosure also provides a method of determining discontinuous transmission, including: transmitting first information to a terminal by a network device, wherein the first information is used by the terminal for determining at least one of an activation period and an inactivation period of discontinuous transmission of N cells, wherein N is an integer greater than or equal to 1.

The present disclosure also provides a terminal, including a memory, a transceiver and a processor, wherein, the memory is configured for storing a computer program, the transceiver is configured for transmitting and receiving data under the control of the processor; and the processor is configured for reading the computer program in the memory and performing the following operations: determining at least one of an activation period and an inactivation period of discontinuous transmission of N cells based on first information, wherein N is an integer greater than or equal to 1.

The present disclosure also provides a terminal, including: a determination module configured to determine at least one of an activation period and an inactivation period of discontinuous transmission of N cells based on first information, wherein N is an integer greater than or equal to 1.

The present disclosure also provides a network device, including a memory, a transceiver and a processor, wherein, the memory is configured for storing a computer program; the transceiver is configured for transmitting and receiving data under the control of the processor; and the processor is configured for reading the computer program in the memory and performing the following operations: transmitting first information to a terminal, wherein the first information is used by the terminal for determining at least one of an activation period and an inactivation period of discontinuous transmission of N cells based on first information, wherein N is an integer greater than or equal to 1.

The present disclosure also provides a network device, including: a transmitting module, configured to transmit first information to a terminal, wherein the first information is used by the terminal for determining at least one of an activation period and an inactivation period of discontinuous transmission of N cells, wherein N is an integer greater than or equal to 1.

An embodiment of the present disclosure also provides a processor-readable storage medium, which stores a computer program, and the computer program is used to enable the processor to execute the method of determining the discontinuous transmission on the terminal side provided by the embodiment of the present disclosure, or the computer program is used to enable the processor to execute the method of determining the discontinuous transmission of the network device provided by the embodiment of the present disclosure.

In the embodiment of the present disclosure, the terminal determines at least one of the activation period and the inactivation period of the discontinuous transmission of N cells based on the first information, where N is an integer greater than or equal to 1. Through the above process, in the CA scenario, the terminal can determine the activation period or inactivation period of the discontinuous transmission of the cell according to the first information, so that the terminal can perform different discontinuous transmissions according to the activation period or inactivation period of the discontinuous transmission of each cell. In this way, the terminal is capable of not performing corresponding signal transmissions during the inactivation period of the discontinuous transmission of the cells, which can reduce the power consumption of the terminal. In addition, from the perspective of the network device, when the service cells of the terminal within the service range are all in the DTX/DRX transmission inactivation, the network device can perform corresponding energy-saving operations, which can reduce the power consumption of the network device.

### BRIEF DESCRIPTION OF THE DRAWINGS

FIG. 1 is a schematic diagram of a DRX mechanism;
FIG. 2 is a schematic diagram of a network architecture applicable to the implementation of the present disclosure;
FIG. 3 is a flowchart of a method of determining discontinuous transmission provided by an embodiment of the present disclosure;
FIG. 4 is a schematic diagram of two parameters of the same configuration provided by an embodiment of the present disclosure;
FIG. 5 is a schematic diagram of two independent parameter configurations provided by an embodiment of the present disclosure;
FIG. 6 is a schematic diagram of dynamic adjustment provided by an embodiment of the present disclosure;
FIG. 7 is a schematic diagram of another dynamic adjustment provided by an embodiment of the present disclosure;
FIG. 8 is a flowchart of another method of determining discontinuous transmission provided by an embodiment of the present disclosure;
FIG. 9 is a structural diagram of a terminal provided by an embodiment of the present disclosure;
FIG. 10 is a structural diagram of a network device provided in an embodiment of the present disclosure;
FIG. 11 is another structural diagram of a terminal provided in an embodiment of the present disclosure;
FIG. 12 is another structural diagram of a network device provided in an embodiment of the present disclosure.

### DETAILED DESCRIPTION

In order to make the technical problems, technical solutions and advantages to be solved by the present disclosure clearer, a detailed description will be given below with reference to the accompanying drawings and specific embodiments.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after the character are in an "or" relationship.

The term "plurality" in the embodiments of the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without making creative work are within the scope of protection of the present disclosure.

Before introducing the embodiments of the present disclosure, a brief introduction to the relevant contents in the related art is first given.

### (a) DRX transmission

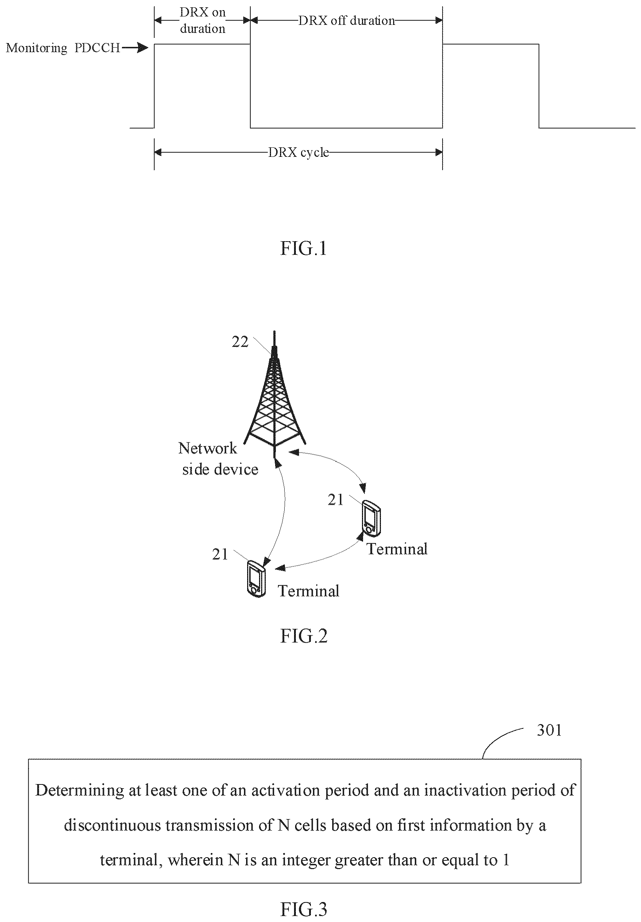

In the related art, the terminal is usually configured with only one set of DRX parameters. For one DRX cycle, the UE will monitor PDCCH discontinuously for all serving cells. The UE monitors PDCCH only during the DRX activation period or when the inactivity timer has not timed out. The mechanism of DRX can be seen in FIG. 1. As shown in FIG. 1, a DRX cycle includes a DRX activation period and a DRX inactivation period (Opportunity for DRX, i.e., DRX-OFF). In one DRX cycle, the UE only monitors PDCCH during the DRX activation period. During the DRX inactivation period, the UE does not receive other PDCCHs except the scheduling broadcast signaling to reduce power consumption, i.e., the UE enters a sleep mode.

A DRX transmission mechanism for a terminal in Radio Resource Control (RRC) connected state, the UE only performs discontinuous monitoring on the PDCCH scrambled by the following Radio Network Temporary Identifiers (RNTI): Cell Radio Network Temporary Identifier (Cell RNTI, C-RNTI), Cancellation Indication RNTI (Cancellation Indication RNTI, CI-RNTI), Configured Scheduling RNTI (Configured Scheduling RNTI, CS-RNTI), Interruption RNTI (Interruption RNTI, INT-RNTI), Slot Format Indication RNTI (Slot Format Indication RNTI, SFI-RNTI), Semi-Persistent CSI RNTI (Semi-Persistent CSI RNTI, SP-CSI-RNTI), Transmit Power Control-Physical Uplink Control Channel-RNTI (Transmit Power Control-Physical Uplink Control Channel-RNTI, TPC-PUCCH-RNTI), TPC-Physical Uplink Shared Channel-RNTI (TPC-Physical Uplink Shared Channel-RNTI). Channel-RNTI, TPC-PUSCH-RNTI), TPC-Sounding Reference Symbol-RNTI (Transmit Power Control-Sounding Reference Symbols-RNTI, TPC-SRS-RNTI) and Availability Indication-RNTI (Availability indication-RNTI, AI-RNTI). In addition, the RNTIs, not restricted by DRX, for scrambling PDCCHs include: System Information RNTI (System Information RNTI, SI-RNTI), MBS Control Channel RNTI (MBS Control Channel RNTI, MCCH-RNTI), Group RNTI (Group RNTI, G-RNTI), Random Access RNTI (Random Access RNTI, RA-RNTI), Message B-RNTI (MsgB-RNTI), TC-RNTI, Paging RNTI (P-RNTI), Power Saving RNTI (Power Saving RNTI, PS-RNTI), Sidelink RNTI (Sidelink RNTI, SL-RNTI), Sidelink CS-RNTI (SL-CS-RNTI) or Sidelink Semi-Persistent Scheduling (SL Semi-Persistent Scheduling) Vehicle-to-Everything RNTI (V-RNTI).

The DRX activation period includes any of the following situations: the time period during which the DRX onDurationTimer (drx-onDurationTimer) or the DRX InactivityTimer (drx-InactivityTimer) runs; the time period during which the downlink retransmission timer (drx-RetransmissionTimerDL) or the uplink retransmission timer (drx-RetransmissionTimerUL) runs; the time period during which the random access timer based on contention resolution (ra-ContentionResolutionTimer) or the message-B response window (msgB-ResponseWindow) runs; when a scheduling request is sent on the PUCCH channel and is in a pending state; in the contention-based random access procedure, a PDCCH indicating a new transmission addressed to the C-RNTI of the MAC entity has not been received after successful reception of a Random Access Response for the Random Access Preamble not selected by the MAC entity among the contention-based Random Access Preamble.

During the DRX inactivation period, the terminal needs to perform semi-persistent scheduling (SPS) physical downlink shared channel (PDSCH) transmission, periodic channel state information (CSI) measurement, system message reception, energy-saving signal reception, CSI-RS (TRS) reference signal for tracking, radio resource management (RRM) measurement and permanent equipment identifier (PEI) reception.

The base station can configure two DRX groups for the serving cell of the terminal. In addition to having different drx-onDurationTimers and drx-InactivityTimers in the two DRX groups, the other DRX parameters of the two DRX groups are consistent which include: drx-RetransmissionTimerDL, drx-RetransmissionTimerUL, drx-SlotOffset, drx-LongCycleStartOffset, drx-HARQ-RTT-TimerDL, drx-HARQ-RTT-TimerUL, drx-ShortCycle (optional), drx-ShortCycleTimer (optional). In other words, the two DRX groups have the same DRX cycle but may have different activation durations. When the terminal receives a DRX command (such as a DRX Command medium access control control signal (Medium Access Control Control Element, MAC CE) or a Long DRX Command MAC CE), the timers (drx-onDurationTimer and drx-InactivityTimer) of each DRX group will stop.

When a secondary DRX group is configured, some secondary cells (SCells) are configured in the secondary DRX group; otherwise, both the primary cell (PCell) and the SCell are in one DRX group.

### (b) Activation/deactivation of SCell

There are mainly five ways to activate/deactivate a SCell: receiving a SCell activation/deactivation MAC CE; receiving an enhanced SCell activation/deactivation MAC CE; a SCellDeactivationTimer configured on the SCell times out; a secondary cell state (SCellState) configured in the RRC signaling is "activated"; a received secondary cell group state (Secondary Cell Group-State, SCG-State) is "deactivated".

In the CA scenario, the terminal can connect to multiple cells. If discontinuous transmission is applied to the CA scenario, there is no corresponding regulation on how the base station performs discontinuous transmission in different cells. Therefore, the terminal cannot know how the network device performs discontinuous transmission in different cells, which causes the terminal to continuously monitor in multiple cells, resulting in high power consumption of the terminal.

The embodiments of the present disclosure provide a method of determining discontinuous transmission, a terminal, a network device, and a storage medium, so as to solve the problem that in a CA scenario, the terminal cannot know how the network device performs discontinuous transmission in different cells, resulting in high power consumption of the terminal.

The method and the device are based on the same application concept. Since the principles of solving problems by the method and the device are similar, the implementation of the device and the method can refer to each other, and the repeated parts will not be repeated.

The technical solution provided by the embodiments of the present disclosure can be applicable to a variety of systems, especially 5G systems and 6G systems. For example, the applicable systems can be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new air interface (NR) system, 6G system, etc. These various systems include terminals and network device. The system may also include a core network part, such as an evolved packet system (EPS), a 5G system (5G System, 5GS), etc.

Refer to FIG. 2, which is a schematic diagram of a network architecture applicable to the implementation of the present disclosure. As shown in FIG. 2, the network architecture includes a terminal 21 and a network device 22, wherein, the terminal 21 involved in the embodiment of the present disclosure may be a device that provides voice and/or data connectivity to the user, a handheld device with a wireless connection function, or other processing devices connected to a wireless modem. In different systems, the name of the terminal may also be different. For example, in a 5G system, the terminal may be called a user equipment (UE). A wireless terminal can communicate with one or more core networks (CN) via a radio access network (RAN). The wireless terminal may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDA), Redcap terminals and other devices. The wireless terminal may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

The network device 22 involved in the embodiment of the present disclosure may be a base station, which may include multiple cells providing services for the terminal. Depending on the specific application scenario, the base station may also be called an access point, or may be a device in the access network that communicates with the wireless terminal device through one or more sectors on the air interface, or other names. The network device may be used to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (Global System for Mobile communications, GSM) or Code Division Multiple Access (Code Division Multiple Access, CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), a base station in 6G, or a home evolved Node B (HeNB), a relay node, a home base station (femto), a pico base station (pico), etc., which is not limited in the embodiments of the present disclosure. In some network structures, the network device may include a centralized unit (CU) and a distributed unit (DU), and the centralized unit and the distributed unit may also be arranged geographically separately.

In the embodiments of the present disclosure, the network device and the terminal may each use one or more antennas for multiple input multiple output (MIMO) transmission, and the MIMO transmission may be single user MIMO (SU-MIMO) or multi-user MIMO (MU-MIMO). Depending on the form and number of antenna combinations, the MIMO transmission may be two-dimensional MIMO (2D-MIMO), three-dimensional MIMO (3D-MIMO), full-dimensional MIMO (FD-MIMO), or massive MIMO, or it may be diversity transmission, precoded transmission, or beamforming transmission, etc.

Refer to FIG. 3, which is a flow chart of a method of determining discontinuous transmission provided by an embodiment of the present disclosure. As shown in FIG. 3, the method of determining discontinuous transmission includes the following steps.

Step 301: determining at least one of an activation period and an inactivation period of discontinuous transmission of N cells based on first information by a terminal, wherein N is an integer greater than or equal to 1.

In the embodiment of the present disclosure, the N cells may be understood as target cells for which the terminal needs to determine at least one of an activation period and an inactivation period of discontinuous transmission.

In the embodiment of the present disclosure, the terminal determines at least one of the activation period and the inactivation period of the discontinuous transmission of N cells based on the first information, where N is an integer greater than or equal to 1. Through the above process, in the CA scenario, the terminal can determine the activation period or inactivation period of the discontinuous transmission of the cell according to the first information, so that the terminal can perform different discontinuous transmissions according to the activation period or inactivation period of the discontinuous transmission of each cell. In this way, the terminal will not perform corresponding signal transmissions during the inactivation period of the discontinuous transmission of the cell, which can reduce the power consumption of the terminal. In addition, from the perspective of the network device, when the service cells of the terminal within the service range are all in the DTX/DRX transmission inactivation state, the network device can perform corresponding energy-saving operations, which can reduce the power consumption of the network device.

In the embodiment of the present disclosure, the first information can be understood as information used to configure discontinuous transmission, or information used to indicate discontinuous transmission configuration, or information used to indicate the association between the cell and the discontinuous transmission configuration, or any other information related to the determination of discontinuous transmission of the cell, which is not limited in the embodiment of the present disclosure.

In some embodiments, the first information includes at least one of first configuration information, first association relationship and first indication information; wherein, the first configuration information includes at least one piece of discontinuous transmission configuration information configured by the network device; the first association relationship includes association relationship between some or all of the N cells and the at least one piece of discontinuous transmission configuration information; the first indication information is configured to adjust or indicate the discontinuous transmission configuration information corresponding to some or all of the N cells.

In this implementation, the network device may configure at least one piece of discontinuous transmission configuration information by issuing the first configuration information. For example, the network device may uniformly configure multiple pieces of discontinuous transmission configuration information, or the network device may configure at least one piece of discontinuous transmission configuration information for one or some cells.

The first association relationship may be pre-configured by the network device or agreed upon by a protocol. Taking the protocol agreement as an example, the protocol may specify the association relationship between multiple cells and the discontinuous transmission configuration information by agreeing on the first association relationship, and the multiple cells may include all of the N cells or part of the N cells.

The network device may adjust or indicate the discontinuous transmission configuration information of multiple cells by sending the first indication information. The multiple cells may include all of the N cells or part of the N cells.

In this implementation, through one or more of the above-mentioned configuration information, association relationship and indication information, the terminal can determine the activation period or deactivation period of the discontinuous transmission of each cell, so that the terminal can perform different discontinuous transmissions according to the activation period or deactivation period of the discontinuous transmission of each cell.

The following describes various possible configuration situations of the first configuration information.

In some embodiments, the at least one piece of discontinuous transmission configuration information configured by the network device includes at least one piece of discontinuous transmission configuration information configured by the network device for some or all of the N cells.

In this implementation, the network device may configure multiple pieces of discontinuous transmission configuration information for multiple cells, and the multiple cells may include all of the N cells or part of the N cells. The one or more of multiple pieces of discontinuous transmission configuration information may belong to some or all of the N cells.

As an example, the network device may configure the discontinuous transmission configuration information only for the PCell in the N cells, or may configure the discontinuous transmission configuration information for different cells or cell groups in the N cells.

In some embodiments, the first configuration information is used to configure at least one of the following: a period of the discontinuous transmission; information related to the activation period of the discontinuous transmission; information related to the inactivation period of the discontinuous transmission.

In some embodiments, the information related to the activation period of the discontinuous transmission includes at least one of the following: the starting time of the activation period of the discontinuous transmission; the end time of the activation period of the discontinuous transmission; the duration of the activation period of the discontinuous transmission.

In some embodiments, the information related to the inactivation period of the discontinuous transmission includes at least one of the following: the starting time of the inactivation period of the discontinuous transmission; the end time of the inactivation period of the discontinuous transmission; the duration of the inactivation period of the discontinuous transmission.

In some embodiments, the information related to the activation period of the discontinuous transmission is represented by the information related to the inactivation period of the discontinuous transmission.

In some embodiments, the at least one piece of discontinuous transmission configuration information includes at least one of the following: tt least one piece of discontinuous transmission DTX configuration information; At least one piece of discontinuous reception DRX configuration information.

In this implementation manner, the at least one piece of discontinuous transmission configuration information configured by the network device for some or all of the N cells may include one or more pieces of DTX configuration information, may include one or more pieces of DRX configuration information, and may also include one or more pieces of DTX configuration information and one or more pieces of DRX configuration information. In some embodiments, the DTX configuration information and the DRX configuration information are configured independently; or, the DTX configuration information and the DRX configuration information are located in the same configuration information.

In this implementation, the DTX configuration information and the DRX configuration information may be configured independently or in the same configuration. It should be noted that when the DTX configuration information and the DRX configuration information are configured independently, the DTX configuration information and the DRX configuration information may be associated with the same configuration information. In addition, the configuration information here may be one or more configurations, and the DTX configuration information and the DRX configuration information are respectively associated with a certain configuration in the configuration information.

The DTX configuration information and the DRX configuration information are located in the same configuration information. For example, the DTX configuration information and the DRX configuration information may be located in the same list or in the same common configuration (common). This is not limited in the embodiments of the present disclosure.

In some embodiments, each DTX configuration information of the at least one piece of DTX configuration information includes at least one set of DTX parameters; and/or, each DRX configuration information of the at least one piece of DRX configuration information includes at least one set of DRX parameters.

In this implementation, any DTX configuration information may include either one set of DTX parameters or multiple sets of DTX parameters. Correspondingly, any DRX configuration information may include either one set of DRX parameters or multiple sets of DRX parameters.

In some embodiments, some or each of the N cells is associated with at least one set of the DTX parameters; or some cell groups or each cell group of the N cells is associated with at least one set of the DTX parameters; or some cells or each cell of the N cells is associated with at least one set of the DRX parameters; or some cell groups or each cell group of the N cells is associated with at least one set of the DRX parameters.

In this implementation manner, any cell among the N cells may be associated with at least one set of DTX parameters but not with DRX parameters; may also be associated with at least one set of DRX parameters but not with DTX parameters; it may also be associated with at least one set of DTX parameters and at least one set of DRX parameters.

Correspondingly, any cell group among the N cells can be associated with at least one set of DTX parameters but not with DRX parameters, or can be associated with at least one set of DRX parameters but not with DTX parameters, or can be associated with at least one set of DTX parameters and at least one set of DRX parameters.

The above are multiple possible configuration situations of the first configuration information.

In some embodiments, the N cells include at least one of the following: a primary cell PCell; at least one secondary cell SCell; at least one cell group.

Optionally, the at least one cell group includes at least one of a DRX group and an SCell group configured by the network device.

Here, the cell group may be an SCell group, or a cell group including a PCell and a SCell, or a cell group in which the first DRX group includes a PCell and at least one SCell, or a cell group in which the second DRX group includes at least one SCell.

The following describes various possible sending methods (for a network device) and receiving methods (for a terminal) of the first configuration information.

In some embodiments, the at least one piece of discontinuous transmission configuration information is sent in at least one of a PCell, at least one SCell, and at least one Cell group.

As mentioned above, the first configuration information includes at least one piece of discontinuous transmission configuration information configured by the network device for some or all of the N cells. Any discontinuous transmission configuration information in the at least one piece of discontinuous transmission configuration information can be sent on the PCell, on the SCell, or on the Cell group. In the at least one piece of discontinuous transmission configuration information, different discontinuous transmission configuration information can be sent on the same SCell or on different SCells; or, different discontinuous transmission configuration information can be sent on the same Cell group or on different Cell groups. The embodiments of the present disclosure are not limited to this. In some embodiments, the method includes at least one of the following: receiving, by the terminal in a PCell, second information in the first configuration information, wherein the second information is discontinuous transmission configuration information applied to at least one SCell; receiving, by the terminal in a PCell, third information in the first configuration information, wherein the third information is discontinuous transmission configuration information applied to at least one cell group; receiving, by the terminal in a first SCell, fourth information in the first configuration information, wherein the fourth information is discontinuous transmission configuration information applied to the first SCell; receiving, by the terminal in a second SCell, fifth information in the first configuration information, wherein the fifth information is discontinuous transmission configuration information applied to at least one SCell; receiving, by the terminal in some or all of the cells of the first cell group, sixth information in the first configuration information, wherein the sixth information is discontinuous transmission configuration information applied to the first cell group; receiving, by the terminal in some or all of the cells of the second cell group, seventh information in the first configuration information, wherein the seventh information is discontinuous transmission configuration information applied to at least one cell group; receiving, by the terminal in a third SCell, eighth information in the first configuration information, wherein the eighth information is discontinuous transmission configuration information applied to the PCell; receiving, by the terminal, ninth information in the first configuration information in the PCell, wherein the ninth information is discontinuous transmission configuration information applied to the PCell.

As mentioned above, the first configuration information includes at least one piece of discontinuous transmission configuration information configured by the network device for some or all of the N cells. This implementation provides multiple ways for the terminal to receive the at least one piece of discontinuous transmission configuration information, and the following supplementary explanations are given for several of the multiple ways.

For the second information, the number of the second information may be one or more. When the number of the second information is one, the one piece of second information may be applied to at least one SCell; when the number of the second information is more than one, the more than one piece of second information may be applied to more than one SCell. Specifically, the more than one piece of second information corresponds to more than one SCell.

Correspondingly, for the third information, the number of the third information can be one or more. When the number of the third information is one, the one piece of third information can be applied to at least one Cell group; when the number of the third information is multiple, the multiple pieces of third information can be applied to multiple Cell groups. Specifically, the multiple pieces of third information correspond to the multiple Cell groups in a one-to-one manner.

Correspondingly, for the fifth information, the number of the fifth information can be one or more. When the number of the fifth information is one, the one piece of fifth information can be applied to at least one SCell; when the number of the fifth information is multiple, the multiple pieces of fifth information can be applied to multiple SCells. Specifically, the multiple pieces of fifth information corresponds to the multiple SCells in a one-to-one manner.

Correspondingly, for the seventh information, the number of the seventh information can be one or more. When the number of the seventh information is one, the one piece of seventh information can be applied to at least one Cell group; when the number of the seventh information is more than one, the more than one piece of seventh information can be applied to multiple Cell groups. Specifically, the more than one piece of seventh information corresponds to the multiple Cell groups in a one-to-one manner.

The above-mentioned Cell group may be, for example, a DRX group, or a Cell group dedicated to network energy-saving configured by a base station, or a Cell group configured by a base station.

In addition, it should be noted that: the first SCell may be a certain SCell among the N cells.

Correspondingly, the first Cell group may be a Cell group among N cells.

For the second SCell, the at least one SCell to which the fifth information is applied may include the second SCell or may not include the second SCell. That is, the fifth information may be applied to at least one SCell including the second SCell or to at least one SCell other than the second SCell.

Correspondingly, for the second Cell group, at least one Cell group to which the seventh information is applied may include the second Cell group or may not include the second Cell group. In other words, the seventh information may be applied to at least one Cell group including the second Cell group or to at least one Cell group other than the second Cell group.

In some embodiments, the first configuration information is sent via first signaling, and the first signaling includes at least one of semi-static signaling and dynamic signaling.

Optionally, the semi-static signaling includes at least one of broadcast signaling, multicast signaling, and radio resource control RRC signaling.

Optionally, the dynamic signaling includes at least one of media access control MAC layer signaling and layer 1 signaling.

Optionally, the first signaling includes at least one of cell-specific signaling (Cell-specific) and terminal-specific signaling (UE-specific).

The above are multiple possible sending and receiving methods of the first configuration information.

In the following, various possible ways for a terminal to determine discontinuous transmission of N cells are described respectively.

In some embodiments, the at least one piece of discontinuous transmission configuration information configured by the network device for some or all of the N cells includes at least one piece of discontinuous transmission configuration information configured by the network device for the N cells.

Determining at least one of an activation period and an inactivation period of discontinuous transmission of N cells based on first information by the terminal includes: determining at least one of the activation period and the inactivation period of discontinuous transmission of the N cells based on the first configuration information by the terminal.

In this implementation, the network device configures at least one piece of discontinuous transmission configuration information for N cells through the first configuration information, so that the terminal can obtain the discontinuous transmission configuration information of the N cells based on the first configuration information, the terminal can determine at least one of the activation period and the inactivation period of the discontinuous transmission of the N cells based on the first configuration information alone.

In some embodiments, the at least one piece of discontinuous transmission configuration information configured by the network device for the N cells includes a plurality of discontinuous transmission configuration information configured by the network device for a first cell of the N cells;

The method further includes: receiving second signaling from the network device by the terminal, wherein the second signaling includes second indication information, wherein the second indication information is used to indicate target discontinuous transmission configuration information corresponding to the first cell.

Determining at least one of the activation period and the inactivation period of discontinuous transmission of the N cells based on the first configuration information by the terminal includes: determining at least one of the activation period and the inactivation period of discontinuous transmission of the first cell based on the first configuration information and the second signaling by the terminal.

In this implementation, the network device configures multiple pieces (or multiple sets) of discontinuous transmission configuration information for the first cell among N cells through first configuration information. Furthermore, the network device can indicate the target discontinuous transmission configuration information corresponding to the first cell through second indication information. In this way, the terminal can determine the corresponding target discontinuous transmission configuration information from the multiple pieces of discontinuous transmission configuration information configured in the first cell based on the second signaling carrying the second indication information.

It should be noted that the number of the first cells may be one or more. That is, when the network device configures multiple pieces of discontinuous transmission configuration information for one or some cells, the terminal may jointly determine the target discontinuous transmission configuration information corresponding to the one cell or the some cells based on the first configuration information and the second signaling.

In some embodiments, the at least one piece of discontinuous transmission configuration information configured by the network device includes a plurality of pieces of discontinuous transmission configuration information configured by the network device, and the first association relationship includes association relationship between the second cell of the N cells and the corresponding discontinuous transmission configuration information.

Determining at least one of the activation period and the inactivation period of discontinuous transmission of the N cells based on the first information by the terminal includes: determining at least one of the activation period and the inactivation period of discontinuous transmission of the second cell based on the first configuration information and the first association relationship by the terminal.

In this implementation, the network device can uniformly configure multiple pieces of discontinuous transmission configuration information. In this case, the terminal cannot determine which specific cell or cells the multiple pieces of discontinuous transmission configuration information is applied to based only on the first configuration information. Based on this, if the first association relationship includes association relationship between the second cell of the N cells and the corresponding discontinuous transmission configuration information, then the terminal can jointly determine the target discontinuous transmission configuration information corresponding to the second cell based on the first configuration information and the first association relationship.

It should be noted that the number of the second cells may be one or more. In some embodiments, the at least one piece of discontinuous transmission configuration information configured by the network device for some or all of the N cells includes at least one piece of discontinuous transmission configuration information configured by the network device for a third cell of the N cells, and the first indication information is configured to adjust the discontinuous transmission configuration information corresponding to the third cell.

Determining at least one of the activation period and the inactivation period of discontinuous transmission of the N cells based on the first information by the terminal includes: determining at least one of the activation period and the inactivation period of discontinuous transmission of the third cell based on the first configuration information and the first indication information by the first terminal.

In this implementation, after the network device configures at least one piece of discontinuous transmission configuration information for the third cell of N cells, the network device can also dynamically adjust the discontinuous transmission configuration information corresponding to the third cell through the first indication information. In this case, the terminal needs to jointly determine the target discontinuous transmission configuration information corresponding to the third cell based on the first configuration information and the first indication information.

In this implementation manner, at least one of the start time of the activation period, the end time of the activation period, and the duration of the activation period corresponding to the discontinuous transmission of the third cell can be dynamically adjusted through the first indication information.

The number of pieces (or the number of sets) of discontinuous transmission configuration information configured by the network device for the third cell may be one (or one set) or multiple (or multiple sets). In the case where the network device configures multiple pieces of discontinuous transmission configuration information for the third cell, the first indication information may be used to dynamically adjust one of the discontinuous transmission configuration information of the third cell; it may also be used to dynamically adjust multiple pieces of discontinuous transmission configuration information of the third cell, that is, to switch between different pieces of discontinuous transmission configuration information of the third cell. It should be noted that the number of third cells may be one or multiple. The first indication information may dynamically adjust the discontinuous transmission configuration information of one of the third cells, or may dynamically adjust the discontinuous transmission configuration information of multiple third cells.

Optionally, the first indication information is sent through third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

It should be noted that, when the first indication information is used to dynamically adjust one discontinuous transmission configuration information of the third cell, the third signaling carrying the first indication information may be at least one of the above four signalings; when the first indication information is used to switch among multiple pieces of discontinuous transmission configuration information of the third cell, the third signaling carrying the first indication information may be at least one of the above four signalings.

In the case where the first indication information is used to dynamically adjust the discontinuous transmission configuration information of one of the third cells, the third signaling carrying the first indication information may be at least one of the above four signalings; in the case where the first indication information is used to dynamically adjust the discontinuous transmission configuration information of multiple third cells, the third signaling carrying the first indication information may be at least one of the above four signalings.

In some embodiments, the first indication information is used to indicate discontinuous transmission configuration information corresponding to the N cells;

Determining at least one of the activation period and the inactivation period of discontinuous transmission of the N cells based on the first information by the terminal includes: determining at least one of the activation period and the inactivation period of discontinuous transmission of the N cells based on the first indication information by the terminal.

In this implementation, the network device can indicate the discontinuous transmission configuration information corresponding to N cells through the first indication information, so that the terminal can determine at least one of the activation period and the inactivation period of the discontinuous transmission of the N cells based on the first indication information alone.

Optionally, the first indication information is sent through third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

In some embodiments, the at least one piece of discontinuous transmission configuration information configured by the network device for some or all of the N cells includes at least one piece of discontinuous transmission configuration information configured by the network device for some of the N cells.

Determining at least one of the activation period and the inactivation period of discontinuous transmission of the N cells based on the first information by the terminal includes: determining at least one of the activation period and the inactivation period of discontinuous transmission of the N cells based on the first configuration information and the first association relationship by the terminal.

In this implementation, the discontinuous transmission configuration information configured by the network device is only for some of the N cells, so that the terminal cannot determine at least one of the activation period and the inactivation period of the discontinuous transmission of the N cells based on the first configuration information alone. Based on this, the terminal can jointly determine at least one of the activation period and the inactivation period of the discontinuous transmission of the N cells based on the first configuration information and the first association relationship.

In some embodiments, the at least one piece of discontinuous transmission configuration information configured by the network device for some or all of the N cells includes at least one piece of discontinuous transmission configuration information configured by the network device for a fourth cell of the N cells, and the first association relationship includes association relationship between the fourth cell and a fifth cell of the N cells_{∘}

Determining at least one of the activation period and the inactivation period of discontinuous transmission of the N cells based on the first information by the terminal includes: determining at least one of the activation period and the inactivation period of discontinuous transmission of the N cells based on the first configuration information and the first association relationship by the terminal.

In this implementation, the first association relationship may also be association relationship between cells, based on which the terminal may determine at least one of the activation period and the inactivation period of discontinuous transmission of the cell based on the association relationship between the cells. The above are multiple possible ways for the terminal to determine discontinuous transmission of N cells.

In some embodiments, after the terminal determines at least one of the activation period and the inactivation period of discontinuous transmission of the N cells, the terminal may perform at least one of the following actions in the PCell and/or at least one SCell during the inactivation period of discontinuous transmission: stopping sending uplink data services in the current bandwidth part (Bandwidth Part, BWP); stopping sending signals on the random access channel RACH of the current BWP; stopping sending uplink control signaling in the current BWP; stopping sending a channel state information CSI report in the current BWP; stopping sending the sounding reference signal SRS signal in the current BWP; stopping monitoring a PDCCH in the current BWP; stopping receiving downlink data transmission; starting the inactivity timer; stopping receiving at least one type of a periodic CSI reference signal, a semi-persistent CSI reference signal and an aperiodic CSI reference signal or a CSI reference signal used for tracking; stopping receiving the semi-persistent scheduling (SPS) physical downlink shared channel (PDSCH); deleting the SPS PDSCH; suspending the SPS PDSCH; stopping cell group (Cell Group, CG) PUSCH transmission; deleting the CG PUSCH; suspending the CG PUSCH; sending periodic CSI reports; performing beam failure detection related and beam failure recovery (BFR) related operations; receiving network energy-saving specific signaling in a specific time period or reception opportunity; receiving network energy-saving specific signaling during specific time periods or transmission opportunities; switching to a sleep BWP; switching to BWP which is dedicated to network energy-saving; entering the cell deactivation state; suspending the status of the current cell.

In some embodiments, after the terminal determines at least one of an activation period and an inactivation period of discontinuous transmission of the N cells, the terminal may perform at least one of the following actions on the PCell and/or at least one SCell during the activation period of discontinuous transmission: switching to the first activated BWP; switching to the specified BWP; maintaining a state consistent with a cell state during the inactivation period of the discontinuous transmission, the cell state including any one of an activation state, a inactivation state and a sleep state; entering a cell initial state, where the cell initial state includes any one of an activation state, a inactivation state, and a sleep state; restoring the suspended state of the cell, that is, restoring the cell state during the inactivation period of discontinuous transmission.

It should be noted that the designated BWP is determined by at least one of the following methods: high-level signaling configuration; broadcast signaling configuration; agreement in a protocol.

The initial state of the cell is determined by at least one of the following methods: high-level signaling configuration; broadcast signaling configuration; agreement in a protocol.

The overall process of the embodiment of the present disclosure is exemplified below through a number of specific embodiments.

### Embodiment 1: the base station configures DTX/DRX-related parameters only for PCell.

The base station configures the relevant parameters of gNB DTX/DRX transmission only for the PCell through the first signaling (or the first downlink signaling), that is, the relevant parameters of gNB DTX/DRX transmission are not applied on the SCell.

The relevant parameters of gNB DTX/DRX transmission include at least one of: a DTX/DRX cycle, a start time of a DTX/DRX activation period (DTX/DRX-ON, which may also be written as DTX-ON/DRX-ON), an end time of DTX/DRX-ON, and a duration of the DTX/DRX activation period. The DTX/DRX activation period may also be characterized by relevant information of the inactivation period.

The DTX transmission parameters and the DRX transmission parameters may be configured independently or in the same configuration.

The parameters of gNB DTX/DRX transmission may be a set of configuration parameters or multiple sets of configuration parameters.

The parameters of gNB DTX/DRX transmission can be semi-statically configured, and the first signaling includes at least one of broadcast or multicast signaling (such as System Information Block (SIB)) and RRC signaling.

The parameters of gNB DTX/DRX transmission can also be dynamically indicated, such as: the start time of DTX/DRX-ON and/or the end time of DTX/DRX-ON can be indicated based on dynamic signaling, and the dynamic signaling includes at least cell-specific (Cell-specific) or terminal-specific (UE-specific) DCI/MAC CE/RRC signaling.

The terminal can receive the relevant parameters of gNB DTX/DRX transmission configured by the base station on the PCell, or can receive the relevant parameters of gNB DTX/DRX transmission configured by the base station on the activated SCell.

Determining the target parameters of gNB DTX/DRX transmission on the PCell by the terminal includes at least one of following solutions A to C.

Solution A: the terminal receives the relevant parameters of gNB DTX/DRX transmission configured by the base station through the first signaling, which are the target parameters of gNB DTX/DRX transmission. For example, the base station only configures one set of relevant parameters of gNB DTX/DRX transmission. In this solution, the terminal determines the target parameters of gNB DTX/DRX transmission on the PCell based solely on the first signaling (i.e., the base station configuration).

Solution B: the terminal receives the relevant parameters of gNB DTX/DRX transmission configured by the base station through the first signaling, and the base station also configures the parameters corresponding to a specific index value or serial number as the target parameters of gNB DTX/DRX transmission. For example: the base station configures multiple sets of relevant parameters of gNB DTX/DRX transmission, and configures the parameter with an index value of 0 or the parameter corresponding to the first serial number in a sequence as the target parameter of gNB DTX/DRX transmission. It should be noted that the parameters corresponding to the specific index value or serial number are the target parameters of gNB DTX/DRX transmission, which can be understood as the association relationship between the specific index value or serial number and the target parameters of gNB DTX/DRX transmission. In this solution, the terminal determines the target parameters of gNB DTX/DRX transmission on the PCell jointly based on the first signaling (i.e., the base station configuration) and the association relationship.

Solution C: the terminal receives the relevant parameters of gNB DTX/DRX transmission configured by the base station through the first signaling, and the terminal also receives the second signaling (or second downlink signaling) sent by the base station. For example: the base station configures multiple sets of parameters of gNB DTX/DRX transmission, and the base station also specifically indicates the target parameters of gNB DTX/DRX transmission by sending a second signaling, such as the energy-saving dedicated downlink DCI/MAC CE/RRC signaling of the base station. The indication information of the target parameters of gNB DTX/DRX transmission can be the index value associated with the target parameters of gNB DTX/DRX transmission or the serial number corresponding to the parameters. In this solution, the terminal determines the target parameters of gNB DTX/DRX transmission on the PCell based on the first signaling (i.e., the configuration from the base station) and the second signaling.

When the PCell of the terminal enters DTX/DRX-ON, the base station can adopt at least one of the following actions to prevent the SCell from performing corresponding transmission and reception: sending a SCell activation MAC CE, an enhanced SCell activation MAC CE, and a RRC signaling (if the state of SCell is activated) to activate the corresponding SCell; sending the energy-saving dedicated signaling, such as DCI signaling containing the SCell sleep indication field (DCI format 2_6/0_1/1_1), and DCI signaling for SCell sleep indication (DCI format 1_1) to switch the SCell to the first activated bandwidth part (Bandwidth Part, BWP).

When the PCell of the terminal enters DTX/DRX-OFF (also written as DTX-OFF/DRX-OFF), the base station can adopt at least one of the following actions to implement that the SCell does not perform corresponding receiving and sending actions: before the PCell enters DTX/DRX-OFF, the base station sends a SCell deactivation MAC CE, an enhanced SCell deactivation MAC CE, and an RRC signaling (if the SCell state is deactivation) on the PCell/SCell to instruct the SCell to enter the deactivated state.

Before the PCell enters DTX/DRX-OFF, the base station sends energy-saving dedicated signaling on the PCell, such as DCI signaling containing the SCell sleep indication field (DCI format 2_6/0_1/1_1) and DCI signaling for SCell sleep indication (DCI format 1_1) to indicate that the SCell enters the sleep state.

### Embodiment 2: the base station configures DTX/DRX-related parameters for cells in different cell groups

In this embodiment, the example of the cell group is a C-DRX group (i.e., a connected-state DRX group).

The base station configures the relevant parameters of gNB DTX/DRX transmission for PCell and at least one SCell through the first signaling, the relevant parameters include the first parameters and/or the second parameters. The first parameters are the relevant parameters of gNB DTX/DRX transmission of all cells or part of cells corresponding to the first C-DRX group of the terminal where the PCell is located; the second parameters are the relevant parameters of gNB DTX/DRX transmission of all cells or part of cells corresponding to the second C-DRX group of the terminal.

The parameters can also be further extended so that all cells or part of cells corresponding to each C-DRX group have multiple sets of relevant parameters of DTX and/or DRX transmission, which will not be described in detail here.

The first parameters and the second parameters include common parameters and/or exclusive parameters, wherein,

the common parameters include at least one of the following: DTX/DRX cycle, the start time of DTX/DRX-ON, the end time of DTX/DRX-ON, the offset value between the start time of DTX/DRX-ON and the start time of the activation period of the C-DRX of the terminal, the offset value between the end time of DTX/DRX-ON and the end time of the activation period of C-DRX, and the time deviation between the duration of DTX/DRX-ON and the duration of the C-DRX activation period of the terminal.

It should be noted that the common parameters are applicable to any one or more of the first parameters and the second parameters, and any one or more of the two C-DRX groups.

The exclusive parameters include at least one of the following: DTX/DRX cycle, the start time of DTX/DRX-ON, the end time of DTX/DRX-ON, the duration of the DTX/DRX activation period, the offset value between the start time of DTX/DRX-ON and the start time of the activation period of the C-DRX of the terminal, the offset value between the end time of DTX/DRX-ON and the end time of the activation period of C-DRX, and the time deviation between the duration of DTX/DRX-ON and the duration of the C-DRX activation period of the terminal.

The parameters of gNB DTX/DRX transmission can be semi-statically configured, and the first signaling includes at least one of broadcast or multicast signaling (SIB), RRC signaling, etc.

The parameters of gNB DTX/DRX transmission can also be dynamically indicated, such as the start time of DTX/DRX-ON and/or the end time of DTX/DRX-ON can be indicated based on dynamic signaling, and the first signaling includes at least one of cell-specific (Cell-specific) or terminal-specific (UE-specific) DCI/MAC CE/RRC signaling.

The terminal receives the relevant parameters of gNB DTX/DRX transmission from the base station on the PCell and/or the activated SCell, in at least one of the following manners:
receiving the first parameters and/or the second parameter on the PCell;
receiving the first parameters on a PCell in a first C-DRX group;
receiving the first parameters on one or more activated SCells in a first C-DRX group; receiving the second parameters on one or more activated SCells in the second C-DRX group.

Determining relevant parameters of DTX/DRX transmission applied to different Cell groups by the terminal includes at least one of solutions D to F.

Solution D: the terminal determines relevant parameters of DTX/DRX transmission applied to different Cell groups based on the first parameters and/or second parameters received from and configured by the base station.

Solution E: the terminal determines the target first parameter and/or second parameter based on the configuration from the base station and the second signaling sent by the base station. The second signaling is an energy-saving dedicated downlink DCI/MAC CE/RRC signaling of the base station, which specifically indicates the target parameters of gNB DTX/DRX transmission. The indication information of the parameters of the target gNB DTX/DRX transmission may be an index value associated with the target parameters of gNB DTX/DRX transmission, or a serial number corresponding to the parameter.

Solution F: the terminal determines the target first parameter and/or second parameter based on the agreement of the protocol. For example, the protocol stipulates that the two DRX groups use the same parameters of gNB DTX/DRX transmission, or the protocol stipulates that all cells or part of the cells of the two DRX groups use the first parameter and/or the second parameter respectively.

The first parameter and the second parameter can be a set of configurations (see solution G for details) or two independent sets of configurations (see solution H for details). The two sets of configurations can be configured to the same value or different values.

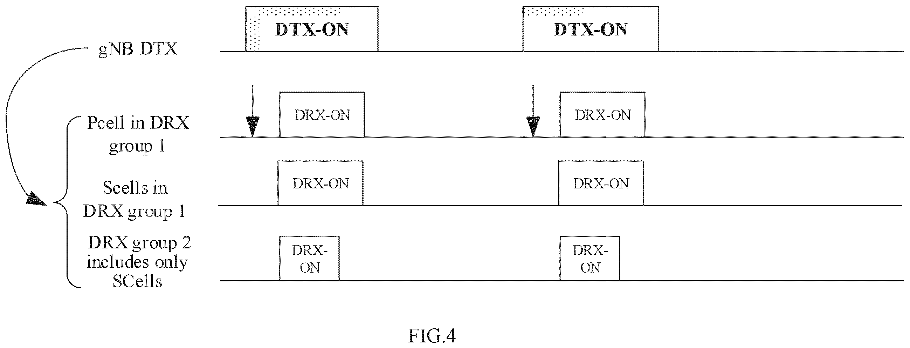

Solution G: as shown in FIG. 4, the terminal applies the first target gNB DTX/DRX parameters to all cells and some cells corresponding to the first C-DRX group and the second C-DRX group, which specifically have at least one of the following features:
that the end time of gNB DTX/DRX-ON is the offset value of the latest end time of the activation period in the first C-DRX group and the second C-DRX group, where the offset value is greater than or equal to 0;
that the start time of gNB DTX/DRX-ON is earlier than the start reception time of the energy-saving signal or the reception preparation time of the energy-saving signal, and the energy-saving signal includes at least DCI format 2_6.

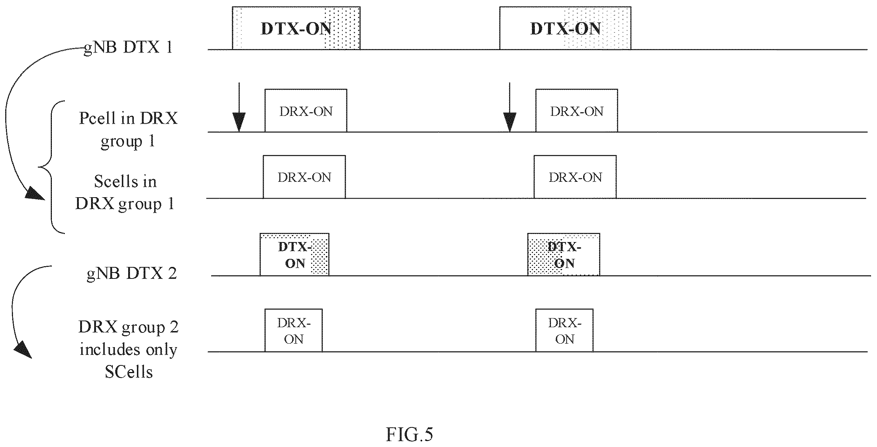

Solution H: as shown in FIG. 5, the terminal applies the first target gNB DTX/DRX parameters and the second target gNB DTX/DRX parameters to all cells and some cells corresponding to the first C-DRX group and the second C-DRX group, respectively, which specifically have at least one of the following features:
that the end time of gNB DTX/DRX-ON applied to all cells and some cells of the first C-DRX group and the end time of the activation period of the first C-DRX group have a certain offset value, where the offset value is greater than or equal to 0;
that the start time of gNB DTX/DRX-ON applied to all cells and some cells of the first C-DRX group and/or the second C-DRX group is earlier than the start reception time of the energy-saving signal or the reception preparation time of the energy-saving signal, and the energy-saving signal includes at least DCI format 2_6;
that the start time of gNB DTX/DRX-ON applied to all Cells and some Cells of the second C-DRX group and the start time of the activation period of the second C-DRX group have a certain offset value, and the offset value is greater than or equal to 0.

Embodiment 3: the base station configures DTX/DRX-related parameters for different cells or different cell groups respectively
The base station configures the relevant parameters of gNB DTX/DRX transmission for the PCell and at least one SCell through the first signaling, the parameters include at least one set of parameters, each corresponding to a cell or a cell group. The specific application relationship between the parameters and the cell can be in at least one of the following situations:
at least one cell including the PCell, wherein each cell or each cell group is independently configured with a set of relevant parameters of gNB DTX/DRX transmission;
at least one cell including PCell, wherein each cell or each cell group is independently configured with at least one set of relevant parameters of gNB DTX/DRX transmission.

The parameters of gNB DTX/DRX transmission can be used to indicate the activation period/inactivation period of gNB DTX/DRX through semi-static configuration and/or dynamic indication.

The parameters of gNB DTX/DRX transmission are semi-statically configured, and the first signaling includes at least one of broadcast or multicast signaling (SIB), RRC signaling, etc.

The parameters of gNB DTX/DRX transmission are dynamically indicated, such as the start time of DTX/DRX-ON and/or the end time of DTX/DRX-ON can be indicated based on dynamic signaling, and the dynamic signaling includes at least cell-specific (Cell-specific) or terminal-specific (UE-specific) DCI/MAC CE/RRC signaling.

Receiving by the terminal the relevant parameters of gNB DTX/DRX transmission sent by the base station on the PCell and/or activated SCell may include at least one of the following:
receiving, on the PCell, relevant parameters for gNB DTX/DRX transmissions applied to the PCell and/or at least one SCell;
receiving, on the PCell, relevant parameters for gNB DTX/DRX transmissions applied to the PCell;
receiving relevant parameters of gNB DTX/DRX transmission applied to Scell or SCell group are on the SCell or the SCell group respectively; for the SCell group, there are corresponding relevant parameters of gNB DTX/DRX transmission, which can be received on any SCell in the SCell group, or all activated SCells, or specific SCell (such as the first SCell or designated SCell in the group);
receiving relevant parameters for gNB DTX/DRX transmission applied to the PCell on any one or specified SCell or SCell group.

For example: the terminal receives on the PCell the at least one set of relevant parameters of gNB DTX/DRX transmission carried by broadcast signaling or RRC signaling, and each set of parameters has a corresponding parameter configuration index. The terminal receives on the PCell the parameter configuration index associated with the relevant parameters of gNB DTX/DRX transmission applied to the PCell, or the cell group including the PCell. The terminal receives the parameter configuration index associated with the relevant parameters for gNB DTX/DRX transmission applied to the activated SCell or the cell group including the activated SCell carried by cell-specific RRC signaling or UE-specific DCI/MAC CE/RRC signaling on the activated SCell. The parameter configuration received by the PCell and/or at least one SCell can be a semi-static configuration, or can be dynamically indicated through dynamic signaling, that is, the parameter configuration takes effect until new parameter configuration indication information is received.

For example, the terminal receives at least one set of relevant parameters of gNB DTX/DRX transmission carried by broadcast signaling or RRC signaling on the PCell, which is applied to the PCell or the cell group including the PCell. The terminal receives, on the activated SCell, relevant parameters of gNB DTX/DRX transmission applied to the activated SCell or the cell group including the activated SCell, the relevant parameters of gNB DTX/DRX transmission are carried by cell-specific RRC signaling or UE-specific MAC/RRC signaling.

Determining by the terminal the relevant parameters of the target gNB DTX/DRX transmission applied on the PCell and/or the activated SCell includes at least one of the following:
that the terminal can also determine the relevant parameters of the target gNB DTX/DRX transmission based on the relevant parameter indication information of the target gNB DTX/DRX transmission carried in the second downlink signaling sent by the base station.

For example, at least one set of relevant parameters of gNB DTX/DRX transmission is configured on the PCell and/or the activated SCell, that is, at least one set of relevant parameters of gNB DTX/DRX transmission is configured on the PCell, and/or at least one set of relevant parameters of gNB DTX/DRX transmission is configured on at least one activated SCell. The terminal receives the second downlink signaling carrying the target parameter indication information, which is used to determine the relevant parameters of target gNB DTX/DRX transmission applied on the PCell and/or the activated SCell.

Applying by the terminal the relevant parameters of the corresponding target gNB DTX/DRX transmission on the PCell and/or activated SCell specifically includes at least one of the following:
That the terminal performs operations related to gNB DTX/DRX transmission on the PCell and/or at least one activated SCell based on the relevant parameters of gNB DTX/DRX transmission configured by the base station;
that the terminal performs operations related to gNB DTX/DRX transmission on the PCell and/or at least one activated SCell based on the determined target relevant parameters of gNB DTX/DRX transmission;
that the terminal performs operations related to gNB DTX/DRX transmission on the PCell and/or at least one activated SCell based on the relevant parameters of the target gNB DTX/DRX transmission determined on the associated PCell or SCell or SCell group.

For SCells without gNB DTX/DRX parameters configured, the gNB DTX/DRX applied on the SCell can be consistent with the configuration on the PCell or the gNB DTX/DRX configured on the SCell of the same cell group. The following methods can be used: when the PCell of the terminal enters DTX/DRX-ON, the SCell of the terminal can have at least one of the following behaviors:
that the SCell can be switched to the first activated BWP or to a specific BWP, which BWP is switched to is configured by RRC signaling;
that the initial state of the SCell is consistent with the state of DTX/DRX-OFF; further, the PCell further indicates the state of the SCell, such as activation/deactivation/sleep;
that the initial state of the SCell is configured by a high-level signaling of the base station,, such as activation/deactivation/sleep;
the SCell resumes the suspended state, that is, resumes the state of the SCell before the PCell enters DTX/DRX-OFF.

When the PCell of the terminal enters DTX/DRX-OFF, the SCell of the terminal can have at least one of the following behaviors:
that before the PCell enters DTX/DRX-OFF, the base station sends a third signaling on the PCell/SCell to instruct the SCell to enter a deactivated state and/or a sleep state;
the third signaling includes at least one of the following: a SCell deactivation MAC CE, an enhanced SCell deactivation MAC CE, RRC signaling (e.g. the Scell state is deactivation); energy-saving dedicated signaling, such as DCI signaling containing a SCell sleep indication field (DCI format 2_6/0_1/1_1), DCI signaling for SCell sleep indication (DCI format 1_1); signaling dedicated for network energy-saving, used to indicate the DCI signaling for deactivating an SCell or SCell group;
that the SCell suspends the current state, that is, the terminal will record the current activation/deactivation/sleeping state of the SCell. The protocol agreement or high-level signaling indicates the state of the SCell during the DTX/DRX-OFF period of the PCell, that is, the deactivation state or the sleep state;
that when the SCell is in DTX/DRX-OFF, it directly switches to the sleep BWP or enters the deactivation state.

Embodiment 4: the base station configures DTX/DRX-related parameters for different cells respectively
The base station configures the relevant parameters of gNB DTX/DRX transmission for the PCell and at least one SCell through the first downlink signaling, the parameters include at least one set of parameters, each parameter corresponds to a cell or a cell group. The correspondence relationship between the parameters and the cells can be at least one of the following situations:
at least one cell including the PCell, wherein each cell or each cell group is independently configured with a set of relevant parameters of gNB DTX/DRX transmission;
at least one cell including the PCell, wherein each cell or each cell group is independently configured with at least one set of relevant parameters of gNB DTX/DRX transmission;
the terminal receives on the PCell and/or the activated SCell the relevant parameters of gNB DTX/DRX transmission sent by the base station.

The terminal may determine relevant parameters of the gNB DTX/DRX transmission received from the base station on the PCell and/or the activated SCell based on any one or more of the base station configuration information, the second signaling, and the third signaling, wherein:
The base station configuration information is the relevant parameters of the corresponding gNB DTX/DRX transmission configured for the PCell and/or activated SCell of the terminal. For details, please refer to the previous embodiment.

The second signaling is used to indicate the relevant parameters of the gNB DTX/DRX transmission applied to the PCell and/or the activated SCell, for example: the base station configures at least one set of relevant parameters of the gNB DTX/DRX transmission. For details, please refer to the previous embodiment.

The third signaling is used to dynamically adjust/indicate the activation period/inactivation period of the corresponding gNB DTX/DRX transmission. Furthermore, the indication information carried by the third signaling is associated with the start time/end time/duration of the activation period/inactivation period of the gNB DTX/DRX transmission applied by the PCell and/or activated SCell.

A specific example is: the terminal determines the activation period/inactivation period of the initial gNB DTX/DRX transmission on the PCell and/or the activated SCell based on the base station configuration information and/or the second signaling, and the terminal can further dynamically adjust the activation period/inactivation period of the gNB DTX/DRX transmission based on the third signaling.

For another example, if the corresponding activation period/inactivation period of gNB DTX/DRX transmission is not configured on the PCell and/or activated SCell of the terminal, the terminal determines the activation period/inactivation period of gNB DTX/DRX transmission based on the third signaling received.

The third signaling received by the terminal may include at least one of the following:
receiving an energy-saving signal on the PCell or PSCell, such as DCI format 2-6, or DCI signaling dedicated to network energy-saving, or MAC layer signaling dedicated to network energy-saving;
downlink signaling carrying sleep indication information of the SCell cell or cell group, such as DCI signaling containing a SCell sleep indication field (DCI format 2_6/0_1/1_1), DCI signaling for the SCell sleep indication (DCI format 1_1);
downlink signaling carrying SCell cell activation/deactivation, such as SCell activation/deactivation MAC CE, enhanced SCell activation/deactivation MAC CE, SCell activation/deactivation RRC signaling, SCell activation/deactivation DCI signaling, etc.;
downlink signaling carrying a BWP switching indication, where the target BWP is a sleep BWP, including DCI/MAC/RRC signaling.

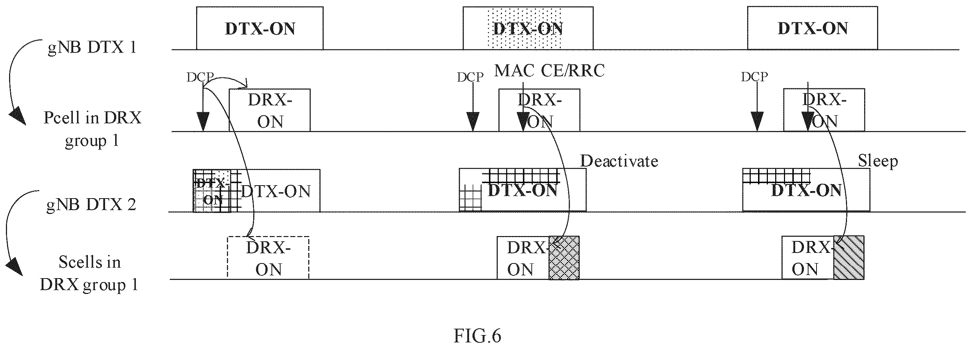

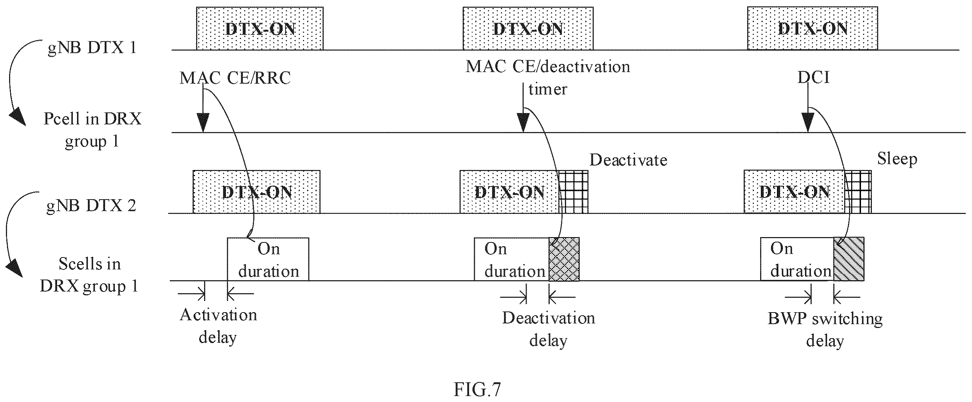

The indication information carried by the third signaling is associated with the start time/end time/duration of the activation period/inactivation period of the gNB DTX/DRX transmission applied by the PCell and/or the activated SCell, and specific examples include at least one of the following cases:
that the activation period of the gNB DTX/DRX transmission of the SCell is associated with the content of the energy-saving signal (such as the energy-saving DCI (DCI with CRC scrambled by PS-RNTI, DCP)) sent on the PCell. For example:
when the DCP indicates that the subsequent DRX on-duration timer is not turned on, the end time of the activation period of the DTX and/or DRX transmission applied on the SCell is the moment when the DCP is received and parsed into the DCP signaling information, or the end position of the time window for receiving the DCP, such as MinTimeGap; otherwise, the end time of the activation period of the gNB DTX/DRX transmission of the SCell is consistent with the configuration on the PCell or the configuration of the base station, as shown in the first DTX cycle in FIG. 6;
that the activation period of the gNB DTX/DRX transmission of the SCell is associated with the information of the deactivation indication information of the SCell. For example: when the terminal receives SCell deactivation signaling, such as MAC CE or RRC signaling, or the deactivation timer times out, the end time of the activation period of the DTX and/or DRX transmission applied on the SCell is a certain time interval after receiving the SCell deactivation signaling or the timer times out, and the time interval is greater than or equal to 0 or greater than or equal to the deactivation delay of the SCell; otherwise, the end time of the activation period of the gNB DTX/DRX transmission of the SCell is consistent with the configuration on the PCell or the configuration of the base station, as shown in the second DTX cycle in FIG. 6;
that the activation period of the gNB DTX/DRX transmission of the SCell is associated with the information of the sleep indication information of the SCell group. For example, when the sleep indication information of the SCell/SCell group indicates that the SCell or SCell group enters the sleep state, the end time of the activation period of the DTX and/or DRX transmission applied on the SCell is a certain time interval after receiving the sleep indication information of the SCell group, and the time interval is greater than or equal to 0; otherwise, the end time of the activation period of the gNB DTX/DRX transmission of the SCell is consistent with the configuration on the PCell or the configuration of the base station, as shown in the third DTX cycle in FIG. 6;
that the activation period of the gNB DTX/DRX transmission of the SCell is associated with the information of the activation indication information of the SCell. For example: when the terminal receives the SCell activation signaling, such as MAC CE or RRC signaling, or the deactivation timer is restarted, the start time of the activation period of the DTX and/or DRX transmission applied on the SCell is a certain time interval after the SCell activation signaling is received or the timer is started, and the time interval is greater than or equal to 0 or greater than or equal to the activation delay of the SCell; otherwise, the start time of the activation period of the gNB DTX/DRX transmission of the SCell is consistent with the configuration on the PCell or the configuration of the base station; as shown in the first DTX cycle in FIG. 7.

### Embodiment 5: Behavior of a terminal when PCell and/or SCell are in DTX/DRX-OFF

When the PCell and/or at least one SCell is in DTX/DRX-OFF, in addition to the terminal behaviors listed in the above embodiments, the terminal behaviors also include at least one of the following:
not sending uplink data services on the current BWP;
not sending a signal on a Random Access Channel (RACH) channel on the current BWP;
not sending uplink control signaling on the current BWP;
not sending a channel State Information (CSI) report on the current BWP;
not sending a Sounding Reference Signal (SRS) signal on the current BWP;
not monitoring the PDCCH on the current BWP;
not receiving downlink data transmission;
starting the dedicated inactivation period timer for DTX/DRX;
not receiving at least one type of CSI Reference Signal (CSI-RS)/CSI-RS for Tracking (TRS) among periodic, semi-persistent, and aperiodic CSI-RSs;
not receiving, deleting or suspending SPS PDSCH transmissions, including at least one of type-1 and type-2;
not sending, deleting or suspending Cell Group (CG) PUSCH transmission, including at least one of type-1 and type-2;
sending a periodic Channel State Information (CSI) report;
performing operations related to beam failure detection and beam failure recovery (BFR);
receiving the corresponding signaling exclusive to network energy-saving in a specific time period or receiving opportunity;
sending the corresponding signaling exclusive to network energy-saving in a specific time period or receiving opportunity.

It should be noted that the above-mentioned DTX/DRX-OFF includes DTX/DRX-OFF determined based on at least one of the DTX/DRX transmission corresponding to the current Cell, or the DTX/DRX transmission corresponding to the associated Cell/Cell group, or the DTX/DRX transmission corresponding to the PCell.

In summary, through the above process, in the CA scenario, the terminal can determine the activation period or inactivation period of the discontinuous transmission of the cell according to the first information, so that the terminal can perform different discontinuous transmissions according to the activation period or inactivation period of the discontinuous transmission of each cell. In this way, the terminal will not perform corresponding signal transmissions during the inactivation period of the discontinuous transmission of the cell, which can reduce the power consumption of the terminal. In addition, from the perspective of the network device, when the service cells of the terminals within the service range are all in the DTX/DRX transmission inactivation, the network device can perform corresponding energy-saving operations, which can reduce the power consumption of the network device.

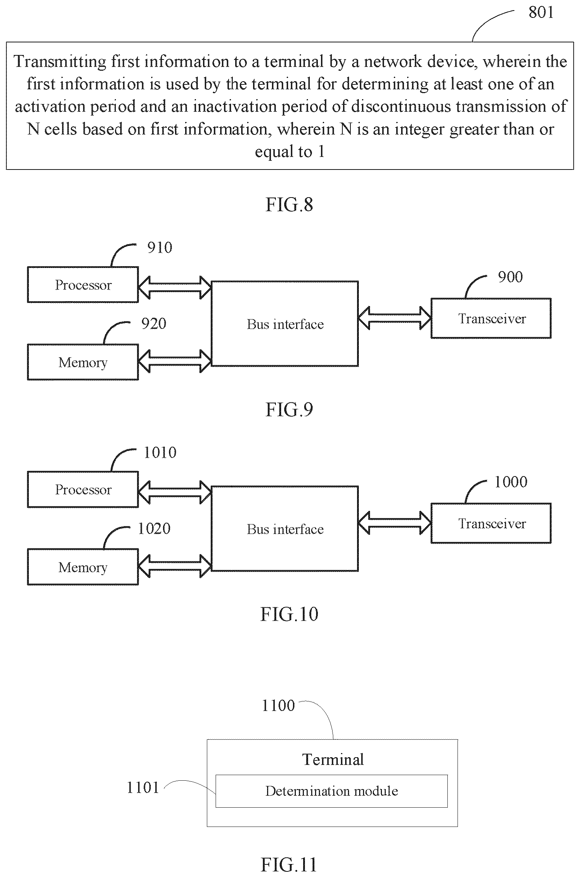

Please refer to FIG. 8, which is a flow chart of a method of determining discontinuous transmission provided by an embodiment of the present disclosure. As shown in FIG. 8, the method of determining discontinuous transmission includes the following steps.

Step 801: transmitting first information to a terminal by a network device, wherein the first information is used by the terminal for determining at least one of an activation period and an inactivation period of discontinuous transmission of N cells, wherein N is an integer greater than or equal to 1.

Optionally, the first information includes at least one of first configuration information, first association relationship, and first indication information; wherein, the first configuration information includes at least one piece of discontinuous transmission configuration information configured by a network device; the first association relationship includes association relationship between some or all of the N cells and the at least one piece of discontinuous transmission configuration information; the first indication information is configured to adjust or indicate discontinuous transmission configuration information corresponding to some or all of the N cells.

Optionally, the at least one piece of discontinuous transmission configuration information configured by the network device includes at least one piece of discontinuous transmission configuration information configured by the network device for some or all of the N cells.

Optionally, the at least one piece of discontinuous transmission configuration information includes at least one of the following: at least one piece of discontinuous transmission DTX configuration information; at least one piece of discontinuous reception DRX configuration information.

Optionally, the DTX configuration information and the DRX configuration information are configured independently; or the DTX configuration information and the DRX configuration information are located in the same configuration information.

Optionally, each DTX configuration information of the at least one piece of DTX configuration information includes at least one set of DTX parameters; and/or, each DRX configuration information of the at least one piece of DRX configuration information includes at least one set of DRX parameters.

Optionally, some or each of the N cells is associated with at least one set of the DTX parameters; or some cell groups or each cell group of the N cells is associated with at least one set of the DTX parameters; or some cells or each cell of the N cells is associated with at least one set of the DRX parameters; or some cell groups or each cell group of the N cells is associated with at least one set of the DRX parameters.

Optionally, the N cells include at least one of the following: a primary cell PCell; at least one secondary cell SCell; at least one cell group.

Optionally, the at least one piece of discontinuous transmission configuration information is sent in at least one of a PCell, at least one SCell, and at least one cell group.

Optionally, a manner in which the network device transmits the first configuration information includes at least one of the following: that the network device transmits, in a PCell, second information in the first configuration information, wherein the second information is discontinuous transmission configuration information applied to at least one SCell; that the network device transmits, in a PCell, third information in the first configuration information, wherein the third information is discontinuous transmission configuration information applied to at least one cell group; that the network device transmits, in a first SCell, fourth information in the first configuration information, wherein the fourth information is discontinuous transmission configuration information applied to the first SCell; that the network device transmits, in a second SCell, fifth information in the first configuration information, wherein the fifth information is discontinuous transmission configuration information applied to at least one SCell; that the network device transmits, in some or all of the cells of the first cell group, sixth information in the first configuration information, wherein the sixth information is discontinuous transmission configuration information applied to the first cell group; that the network device transmits, in some or all of the cells of the second cell group, seventh information in the first configuration information, wherein the seventh information is discontinuous transmission configuration information applied to at least one cell group; that the network device transmits, in a third SCell, eighth information in the first configuration information, wherein the eighth information is discontinuous transmission configuration information applied to the PCell; that the network device transmits ninth information in the first configuration information in the PCell, wherein the ninth information is discontinuous transmission configuration information applied to the PCell.

Optionally, the at least one cell group includes at least one of a DRX group and an SCell group configured by a network device.

Optionally, the first configuration information is sent via first signaling, and the first signaling includes at least one of semi-static signaling and dynamic signaling.

Optionally, the semi-static signaling includes at least one of broadcast signaling, multicast signaling, and radio resource control (RRC) signaling; and/or, the dynamic signaling includes at least one of media access control MAC layer signaling and layer 1 signaling.

Optionally, the first signaling includes at least one of cell-specific signaling and terminal-specific signaling.

Optionally, the at least one piece of discontinuous transmission configuration information configured by the network device for some or all of the N cells includes at least one piece of discontinuous transmission configuration information configured by the network device for the N cells; the first configuration information is used by the terminal for determining at least one of the activation period and the inactivation period of discontinuous transmission of the N cells.

Optionally, the at least one piece of discontinuous transmission configuration information configured by the network device for the N cells includes a plurality of discontinuous transmission configuration information configured by the network device for a first cell of the N cells; the method further includes transmitting second signaling to the terminal by the network device, wherein the second signaling includes second indication information, wherein the second indication information is used to indicate target discontinuous transmission configuration information corresponding to the first cell; the first configuration information and the second signaling are used by the terminal for determining at least one of the activation period and the inactivation period of discontinuous transmission of the first cell.

Optionally, the at least one piece of discontinuous transmission configuration information configured by the network device includes a plurality of pieces of discontinuous transmission configuration information configured by the network device, and the first association relationship includes association relationship between a second cell of the N cells and the corresponding discontinuous transmission configuration information; the first configuration information and the first association relationship are used by the terminal for determining at least one of the activation period and the inactivation period of discontinuous transmission of the second cell.

Optionally, the at least one piece of discontinuous transmission configuration information configured by the network device for some or all of the N cells includes at least one piece of discontinuous transmission configuration information configured by the network device for a third cell of the N cells, and the first indication information is configured to adjust the discontinuous transmission configuration information corresponding to the third cell; the first configuration information and the first indication information are used by the terminal for determining at least one of the activation period and the inactivation period of discontinuous transmission of the third cell.

Optionally, the first indication information is configured to indicate discontinuous transmission configuration information corresponding to the N cells; the first indication information is used by the terminal for determining at least one of the activation period and the inactivation period of discontinuous transmission of the N cells.

Optionally, the first indication information is sent via third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

Optionally, the at least one piece of discontinuous transmission configuration information configured by the network device for some or all of the N cells includes at least one piece of discontinuous transmission configuration information configured by the network device for some of the N cells; the first configuration information and the first association relationship are used by the terminal for determining at least one of the activation period and the inactivation period of discontinuous transmission of the N cells.

It should be noted that this embodiment is an implementation of the network device corresponding to the embodiments shown in FIG.s 3 to 7. Its specific implementation can refer to the relevant descriptions of the embodiments shown in FIG.s 3 to 7. In order to avoid repeated descriptions, this embodiment will not be described again, and the same beneficial effects can still be achieved.

Refer to FIG. 9, which is a structural diagram of a terminal provided by an embodiment of the present disclosure. As shown in FIG. 9, the terminal includes a memory 920, a transceiver 900 and a processor 910.

The memory 920 is used to store computer programs; the transceiver 900 is used to send and receive data under the control of the processor 910; the processor 910 is used to read the computer program in the memory 920 and perform the following operations: determining at least one of an activation period and an inactivation period of discontinuous transmission of N cells based on first information, wherein N is an integer greater than or equal to 1.

In FIG. 9, the bus architecture may include any number of interconnected buses and bridges, specifically one or more processors represented by processor 910 and various circuits of memory represented by memory 920 are linked together. The bus architecture can also link various other circuits such as peripheral devices, voltage regulators and power management circuits together, which are all well known in the art and are therefore not further described herein. The bus interface provides an interface. The transceiver 900 may be a plurality of components, namely, a transmitter and a receiver, providing a unit for communicating with various other devices on a transmission medium, and these transmission media include transmission media such as wireless channels, wired channels, and optical cables. For different user devices, the user interface 930 may also be an interface capable of externally connecting to the required internal devices, and the connected devices include but are not limited to a keypad, a display, a speaker, a microphone, a joystick, and the like.

The processor 910 is responsible for managing the bus architecture and general processing, and the memory 920 can store data used by the processor 910 when performing operations.

Optionally, the processor 910 may be a central processing unit (CPU), an application specific integrated circuit (ASIC), a field programmable gate array (FPGA) or a complex programmable logic device (CPLD), and the processor may also adopt a multi-core architecture.

The processor invokes the computer program stored in the memory to execute any of the methods provided by the embodiments of the present disclosure according to the obtained executable instructions. The processor and the memory can also be arranged physically separately.

Optionally, the first information includes at least one of first configuration information, first association relationship, and first indication information; wherein, the first configuration information includes at least one piece of discontinuous transmission configuration information configured by a network device; the first association relationship includes association relationship between some or all of the N cells and the at least one piece of discontinuous transmission configuration information; the first indication information is configured to adjust or indicate discontinuous transmission configuration information corresponding to some or all of the N cells.

Optionally, the at least one piece of discontinuous transmission configuration information configured by the network device includes at least one piece of discontinuous transmission configuration information configured by the network device for some or all of the N cells.

Optionally, the at least one piece of discontinuous transmission configuration information includes at least one of the following: at least one piece of discontinuous transmission DTX configuration information; at least one piece of discontinuous reception DRX configuration information.

Optionally, the DTX configuration information and the DRX configuration information are configured independently; or the DTX configuration information and the DRX configuration information are located in the same configuration information.

Optionally, each DTX configuration information of the at least one piece of DTX configuration information includes at least one set of DTX parameters; and/or, each DRX configuration information of the at least one piece of DRX configuration information includes at least one set of DRX parameters.

Optionally, some or each of the N cells is associated with at least one set of the DTX parameters; or some cell groups or each cell group of the N cells is associated with at least one set of the DTX parameters; or some cells or each cell of the N cells is associated with at least one set of the DRX parameters; or some cell groups or each cell group of the N cells is associated with at least one set of the DRX parameters.

Optionally, the N cells include at least one of the following: a primary cell PCell; at least one secondary cell SCell; at least one cell group.

Optionally, the at least one piece of discontinuous transmission configuration information is sent in at least one of a PCell, at least one SCell, and at least one Cell group.

Optionally, the transceiver 900 is configured for at least one of the following: receiving, in a PCell, second information in the first configuration information, wherein the second information is discontinuous transmission configuration information applied to at least one SCell; receiving, in a PCell, third information in the first configuration information, wherein the third information is discontinuous transmission configuration information applied to at least one cell group; receiving, in a first SCell, fourth information in the first configuration information, wherein the fourth information is discontinuous transmission configuration information applied to the first SCell; receiving, in a second SCell, fifth information in the first configuration information, wherein the fifth information is discontinuous transmission configuration information applied to at least one SCell; receiving, in some or all of the cells of the first cell group, sixth information in the first configuration information, wherein the sixth information is discontinuous transmission configuration information applied to the first cell group; receiving, in some or all of the cells of the second cell group, seventh information in the first configuration information, wherein the seventh information is discontinuous transmission configuration information applied to at least one cell group; receiving, in a third SCell, eighth information in the first configuration information, wherein the eighth information is discontinuous transmission configuration information applied to the PCell; receiving ninth information in the first configuration information in the PCell, wherein the ninth information is discontinuous transmission configuration information applied to the PCell.

Optionally, the at least one cell group includes at least one of a DRX group and an SCell group configured by a network device.

Optionally, the first configuration information is sent via first signaling, and the first signaling includes at least one of semi-static signaling and dynamic signaling.

Optionally, the semi-static signaling includes at least one of broadcast signaling, multicast signaling, and radio resource control (RRC) signaling; and/or, the dynamic signaling includes at least one of media access control MAC layer signaling and layer 1 signaling.

Optionally, the first signaling includes at least one of cell-specific signaling and terminal-specific signaling.

Optionally, the at least one piece of discontinuous transmission configuration information configured by the network device for some or all of the N cells includes at least one piece of discontinuous transmission configuration information configured by the network device for the N cells; the processor 910 is further configured to: determine at least one of the activation period and the inactivation period of discontinuous transmission of the N cells based on the first configuration information.

Optionally, the at least one piece of discontinuous transmission configuration information configured by the network device for the N cells includes a plurality of discontinuous transmission configuration information configured by the network device for a first cell of the N cells. The transceiver 900 is also used for receiving second signaling from the network device, wherein the second signaling includes second indication information, wherein the second indication information is used to indicate target discontinuous transmission configuration information corresponding to the first cell. The processor 910 is further configured to: determine at least one of the activation period and the inactivation period of discontinuous transmission of the first cell based on the first configuration information and the second signaling.

Optionally, the at least one piece of discontinuous transmission configuration information configured by the network device includes a plurality of pieces of discontinuous transmission configuration information configured by the network device, and the first association relationship includes association relationship between the second cell of the N cells and the corresponding discontinuous transmission configuration information. The processor 910 is further configured to determine at least one of the activation period and the inactivation period of discontinuous transmission of the second cell based on the first configuration information and the first association relationship.

Optionally, the at least one piece of discontinuous transmission configuration information configured by the network device for some or all of the N cells includes at least one piece of discontinuous transmission configuration information configured by the network device for a third cell of the N cells, and the first indication information is configured to adjust the discontinuous transmission configuration information corresponding to the third cell. The processor 910 is further configured to: determine at least one of the activation period and the inactivation period of discontinuous transmission of the third cell based on the first configuration information and the first indication information.

Optionally, the first indication information is configured to indicate discontinuous transmission configuration information corresponding to the N cells. The processor 910 is further configured to: determine at least one of the activation period and the inactivation period of discontinuous transmission of the N cells based on the first indication information.

Optionally, the first indication information is sent via third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

Optionally, the at least one piece of discontinuous transmission configuration information configured by the network device for some or all of the N cells includes at least one piece of discontinuous transmission configuration information configured by the network device for some of the N cells. The processor 910 is further configured to determine at least one of the activation period and the inactivation period of discontinuous transmission of the N cells based on the first configuration information and the first association relationship.

It should be noted here that the above-mentioned terminal provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

Please refer to FIG. 10, which is a structural diagram of a network device provided by an embodiment of the present disclosure. As shown in FIG. 10, the network device includes a memory 1020, a transceiver 1000 and a processor 1010.

The memory 1020 is used to store a computer program; the transceiver 1000 is used to send and receive data under the control of the processor 1010; the processor 1010 is used to read the computer program in the memory 1020 and perform the following operations: transmitting first information to a terminal, wherein the first information is used by the terminal for determining at least one of an activation period and an inactivation period of discontinuous transmission of N cells, wherein N is an integer greater than or equal to 1.

In FIG. 10, the bus architecture may include any number of interconnected buses and bridges, specifically various circuits such as one or more processors represented by processor 1010 and a memory represented by memory 1020 are linked together. The bus architecture can also link various other circuits such as peripherals, regulators, and power management circuits together, which are all well known in the art, so they are not further described herein. The bus interface provides an interface. The transceiver 1000 can be a plurality of components, namely, a transmitter and a receiver, providing a unit for communicating with various other devices on a transmission medium, and these transmission media include transmission media such as wireless channels, wired channels, and optical cables. For different user devices, the user interface 1030 can also be an interface that can be connected to external and internal devices, and the connected devices include but are not limited to keypads, displays, speakers, microphones, joysticks, etc.

The processor 1010 is responsible for managing the bus architecture and general processing, and the memory 1020 can store data used by the processor 1010 when performing operations.

Optionally, the processor 1010 may be a central processing unit (CPU), an application specific integrated circuit (ASIC), a field programmable gate array (FPGA) or a complex programmable logic device (CPLD), and the processor may also adopt a multi-core architecture.

The processor invokes the computer program stored in the memory to execute any of the methods provided by the embodiments of the present disclosure according to the obtained executable instructions. The processor and the memory may also be arranged physically separately.

Optionally, the first information includes at least one of first configuration information, first association relationship, and first indication information; wherein, the first configuration information includes at least one piece of discontinuous transmission configuration information configured by a network device; the first association relationship includes association relationship between some or all of the N cells and the at least one piece of discontinuous transmission configuration information; the first indication information is configured to adjust or indicate discontinuous transmission configuration information corresponding to some or all of the N cells.

Optionally, the at least one piece of discontinuous transmission configuration information configured by the network device includes at least one piece of discontinuous transmission configuration information configured by the network device for some or all of the N cells.

Optionally, the at least one piece of discontinuous transmission configuration information includes at least one of the following: at least one piece of discontinuous transmission DTX configuration information; at least one piece of discontinuous reception DRX configuration information.

Optionally, the DTX configuration information and the DRX configuration information are configured independently; or the DTX configuration information and the DRX configuration information are located in the same configuration information.

Optionally, each DTX configuration information of the at least one piece of DTX configuration information includes at least one set of DTX parameters; and/or, each DRX configuration information of the at least one piece of DRX configuration information includes at least one set of DRX parameters.

Optionally, some or each of the N cells is associated with at least one set of the DTX parameters; or some cell groups or each cell group of the N cells is associated with at least one set of the DTX parameters; or some cells or each cell of the N cells is associated with at least one set of the DRX parameters; or some cell groups or each cell group of the N cells is associated with at least one set of the DRX parameters.

Optionally, the N cells include at least one of the following: a primary cell PCell; at least one secondary cell SCell; at least one cell group.

Optionally, the at least one piece of discontinuous transmission configuration information is sent in at least one of a PCell, at least one SCell, and at least one cell group.

Optionally, the processor 1010 or the transceiver 1000 is configured to perform at least one of the following: transmit, in a PCell, second information in the first configuration information, wherein the second information is discontinuous transmission configuration information applied to at least one SCell; transmit, in a PCell, third information in the first configuration information, wherein the third information is discontinuous transmission configuration information applied to at least one cell group; transmit, in a first SCell, fourth information in the first configuration information, wherein the fourth information is discontinuous transmission configuration information applied to the first SCell; transmit, in a second SCell, fifth information in the first configuration information, wherein the fifth information is discontinuous transmission configuration information applied to at least one SCell; transmit, in some or all of the cells of the first cell group, sixth information in the first configuration information, wherein the sixth information is discontinuous transmission configuration information applied to the first cell group; transmit, in some or all of the cells of the second cell group, seventh information in the first configuration information, wherein the seventh information is discontinuous transmission configuration information applied to at least one cell group; transmit, in a third SCell, eighth information in the first configuration information, wherein the eighth information is discontinuous transmission configuration information applied to the PCell; transmit ninth information in the first configuration information in the PCell, wherein the ninth information is discontinuous transmission configuration information applied to the PCell.

Optionally, the at least one cell group includes at least one of a DRX group and an SCell group configured by a network device.

Optionally, the first configuration information is sent via first signaling, and the first signaling includes at least one of semi-static signaling and dynamic signaling.

Optionally, the semi-static signaling includes at least one of broadcast signaling, multicast signaling, and radio resource control (RRC) signaling; and/or, the dynamic signaling includes at least one of media access control MAC layer signaling and layer 1 signaling.

Optionally, the at least one piece of discontinuous transmission configuration information configured by the network device for some or all of the N cells includes at least one piece of discontinuous transmission configuration information configured by the network device for the N cells; the first configuration information is used by the terminal for determining at least one of the activation period and the inactivation period of discontinuous transmission of the N cells.

Optionally, the at least one piece of discontinuous transmission configuration information configured by the network device for the N cells includes a plurality of discontinuous transmission configuration information configured by the network device for a first cell of the N cells. The processor 1010 or the transceiver 1000 is further configured to: transmit second signaling to the terminal, wherein the second signaling includes second indication information, wherein the second indication information is used to indicate target discontinuous transmission configuration information corresponding to the first cell; the first configuration information and the second signaling are used by the terminal for determining at least one of the activation period and the inactivation period of discontinuous transmission of the first cell.

Optionally, the at least one piece of discontinuous transmission configuration information configured by the network device includes a plurality of pieces of discontinuous transmission configuration information configured by the network device, and the first association relationship includes association relationship between a second cell of the N cells and the corresponding discontinuous transmission configuration information; the first configuration information and the first association relationship are used by the terminal for determining at least one of the activation period and the inactivation period of discontinuous transmission of the second cell.

Optionally, the at least one piece of discontinuous transmission configuration information configured by the network device for some or all of the N cells includes at least one piece of discontinuous transmission configuration information configured by the network device for a third cell of the N cells, and the first indication information is configured to adjust the discontinuous transmission configuration information corresponding to the third cell; the first configuration information and the first indication information are used by the terminal for determining at least one of the activation period and the inactivation period of discontinuous transmission of the third cell.

Optionally, the first indication information is configured to indicate discontinuous transmission configuration information corresponding to the N cells; the first indication information is used by the terminal for determining at least one of the activation period and the inactivation period of discontinuous transmission of the N cells.

Optionally, the first indication information is sent via third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

Optionally, the at least one piece of discontinuous transmission configuration information configured by the network device for some or all of the N cells includes at least one piece of discontinuous transmission configuration information configured by the network device for some of the N cells; the first configuration information and the first association relationship are used by the terminal for determining at least one of the activation period and the inactivation period of discontinuous transmission of the N cells.

It should be noted here that the above-mentioned network device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

Please refer to FIG. 11, which is a structural diagram of a terminal provided in an embodiment of the present disclosure. As shown in FIG. 11, a terminal 1100 includes a determination module 1101 configured to determine at least one of an activation period and an inactivation period of discontinuous transmission of N cells based on first information, wherein N is an integer greater than or equal to 1.

Optionally, the first information includes at least one of first configuration information, first association relationship, and first indication information; wherein, the first configuration information includes at least one piece of discontinuous transmission configuration information configured by a network device; the first association relationship includes association relationship between some or all of the N cells and the at least one piece of discontinuous transmission configuration information; the first indication information is configured to adjust or indicate discontinuous transmission configuration information corresponding to some or all of the N cells.

Optionally, the at least one piece of discontinuous transmission configuration information configured by the network device includes at least one piece of discontinuous transmission configuration information configured by the network device for some or all of the N cells.

Optionally, the at least one piece of discontinuous transmission configuration information includes at least one of the following: at least one piece of discontinuous transmission DTX configuration information; at least one piece of discontinuous reception DRX configuration information.

Optionally, the DTX configuration information and the DRX configuration information are configured independently; or the DTX configuration information and the DRX configuration information are located in the same configuration information.

Optionally, each DTX configuration information of the at least one piece of DTX configuration information includes at least one set of DTX parameters; and/or, each DRX configuration information of the at least one piece of DRX configuration information includes at least one set of DRX parameters.

Optionally, some or each of the N cells is associated with at least one set of the DTX parameters; or some cell groups or each cell group of the N cells is associated with at least one set of the DTX parameters; or some cells or each cell of the N cells is associated with at least one set of the DRX parameters; or some cell groups or each cell group of the N cells is associated with at least one set of the DRX parameters.

Optionally, the N cells include at least one of the following: a primary cell PCell; at least one secondary cell SCell; at least one cell group.

Optionally, the at least one piece of discontinuous transmission configuration information is sent in at least one of a PCell, at least one SCell, and at least one Cell group.

Optionally, the terminal 1100 further includes a first receiving module, configured to perform at least one of the following: receiving, in a PCell, second information in the first configuration information, wherein the second information is discontinuous transmission configuration information applied to at least one SCell; receiving, in a PCell, third information in the first configuration information, wherein the third information is discontinuous transmission configuration information applied to at least one cell group; receiving, in a first SCell, fourth information in the first configuration information, wherein the fourth information is discontinuous transmission configuration information applied to the first SCell; receiving, in a second SCell, fifth information in the first configuration information, wherein the fifth information is discontinuous transmission configuration information applied to at least one SCell; receiving, in some or all of the cells of the first cell group, sixth information in the first configuration information, wherein the sixth information is discontinuous transmission configuration information applied to the first cell group; receiving, in some or all of the cells of the second cell group, seventh information in the first configuration information, wherein the seventh information is discontinuous transmission configuration information applied to at least one cell group; receiving, in a third SCell, eighth information in the first configuration information, wherein the eighth information is discontinuous transmission configuration information applied to the PCell; receiving ninth information in the first configuration information in the PCell, wherein the ninth information is discontinuous transmission configuration information applied to the PCell.

Optionally, the at least one cell group includes at least one of a DRX group and an SCell group configured by a network device.

Optionally, the first configuration information is sent via first signaling, and the first signaling includes at least one of semi-static signaling and dynamic signaling.

Optionally, the semi-static signaling includes at least one of broadcast signaling, multicast signaling, and radio resource control (RRC) signaling; and/or, the dynamic signaling includes at least one of media access control MAC layer signaling and layer 1 signaling.

Optionally, the first signaling includes at least one of cell-specific signaling and terminal-specific signaling.

Optionally, the at least one piece of discontinuous transmission configuration information configured by the network device for some or all of the N cells includes at least one piece of discontinuous transmission configuration information configured by the network device for the N cells; the determination module 1101 is specifically configured to determine at least one of the activation period and the inactivation period of discontinuous transmission of the N cells based on the first configuration information by the terminal.

Optionally, the at least one piece of discontinuous transmission configuration information configured by the network device for the N cells includes a plurality of discontinuous transmission configuration information configured by the network device for a first cell of the N cells. The terminal 1100 further includes a second receiving module, configured to receive second signaling from the network device, wherein the second signaling includes second indication information, wherein the second indication information is used to indicate target discontinuous transmission configuration information corresponding to the first cell. The determination module 1101 is specifically configured to determine at least one of the activation period and the inactivation period of discontinuous transmission of the first cell based on the first configuration information and the second signaling.

Optionally, the at least one piece of discontinuous transmission configuration information configured by the network device includes a plurality of pieces of discontinuous transmission configuration information configured by the network device, and the first association relationship includes association relationship between the second cell of the N cells and the corresponding discontinuous transmission configuration information. The determination module 1101 is specifically configured to determine at least one of the activation period and the inactivation period of discontinuous transmission of the second cell based on the first configuration information and the first association relationship.

Optionally, the at least one piece of discontinuous transmission configuration information configured by the network device for some or all of the N cells includes at least one piece of discontinuous transmission configuration information configured by the network device for a third cell of the N cells, and the first indication information is configured to adjust the discontinuous transmission configuration information corresponding to the third cell. The determination module 1101 is specifically configured to determine at least one of the activation period and the inactivation period of discontinuous transmission of the third cell based on the first configuration information and the first indication information.

Optionally, the first indication information is configured to indicate discontinuous transmission configuration information corresponding to the N cells; the determination module 1101 is specifically configured to determine at least one of the activation period and the inactivation period of discontinuous transmission of the N cells based on the first indication information.

Optionally, the first indication information is sent via third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

Optionally, the at least one piece of discontinuous transmission configuration information configured by the network device for some or all of the N cells includes at least one piece of discontinuous transmission configuration information configured by the network device for some of the N cells. The determination module 1101 is specifically configured to determine at least one of the activation period and the inactivation period of discontinuous transmission of the N cells based on the first configuration information and the first association relationship.

It should be noted here that the above-mentioned terminal provided in the embodiment of the present disclosure can implement all the method steps implemented in the above-mentioned method embodiment and can achieve the same technical effect. The parts and beneficial effects of this embodiment that are the same as those in the method embodiment will not be described in detail here.

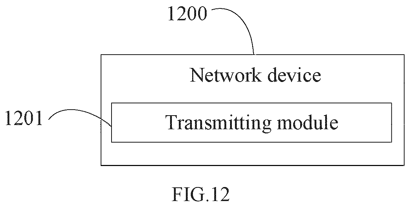

Please refer to FIG. 12, which is a structural diagram of a network device provided in an embodiment of the present disclosure. As shown in FIG. 12, the network device 1200 includes a transmitting module 1201 configured to transmit first information to a terminal, wherein the first information is used by the terminal for determining at least one of an activation period and an inactivation period of discontinuous transmission of N cells, wherein N is an integer greater than or equal to 1.

Optionally, the first information includes at least one of first configuration information, first association relationship, and first indication information; wherein, the first configuration information includes at least one piece of discontinuous transmission configuration information configured by a network device; the first association relationship includes association relationship between some or all of the N cells and the at least one piece of discontinuous transmission configuration information; the first indication information is configured to adjust or indicate discontinuous transmission configuration information corresponding to some or all of the N cells.

Optionally, the at least one piece of discontinuous transmission configuration information configured by the network device includes at least one piece of discontinuous transmission configuration information configured by the network device for some or all of the N cells.

Optionally, the at least one piece of discontinuous transmission configuration information includes at least one of the following: at least one piece of discontinuous transmission DTX configuration information; at least one piece of discontinuous reception DRX configuration information.

Optionally, the DTX configuration information and the DRX configuration information are configured independently; or the DTX configuration information and the DRX configuration information are located in the same configuration information.

Optionally, each DTX configuration information of the at least one piece of DTX configuration information includes at least one set of DTX parameters; and/or, each DRX configuration information of the at least one piece of DRX configuration information includes at least one set of DRX parameters.

Optionally, some or each of the N cells is associated with at least one set of the DTX parameters; or some cell groups or each cell group of the N cells is associated with at least one set of the DTX parameters; or some cells or each cell of the N cells is associated with at least one set of the DRX parameters; or some cell groups or each cell group of the N cells is associated with at least one set of the DRX parameters.

Optionally, the at least one piece of discontinuous transmission configuration information is sent in at least one of a PCell, at least one SCell, and at least one cell group.

Optionally, the at least one piece of discontinuous transmission configuration information is sent in at least one of the PCell, at least one SCell and at least one Cell group.

Optionally, the transmitting module 1201 is specifically configured to perform at least one of the following: transmitting, in a PCell, second information in the first configuration information, wherein the second information is discontinuous transmission configuration information applied to at least one SCell; transmitting, in a PCell, third information in the first configuration information, wherein the third information is discontinuous transmission configuration information applied to at least one cell group; transmitting, in a first SCell, fourth information in the first configuration information, wherein the fourth information is discontinuous transmission configuration information applied to the first SCell; transmitting, in a second SCell, fifth information in the first configuration information, wherein the fifth information is discontinuous transmission configuration information applied to at least one SCell; transmitting, in some or all of the cells of the first cell group, sixth information in the first configuration information, wherein the sixth information is discontinuous transmission configuration information applied to the first cell group; transmitting, in some or all of the cells of the second cell group, seventh information in the first configuration information, wherein the seventh information is discontinuous transmission configuration information applied to at least one cell group; transmitting, in a third SCell, eighth information in the first configuration information, wherein the eighth information is discontinuous transmission configuration information applied to the PCell; transmitting ninth information in the first configuration information in the PCell, wherein the ninth information is discontinuous transmission configuration information applied to the PCell.

Optionally, the at least one cell group includes at least one of a DRX group and an SCell group configured by a network device.

Optionally, the first configuration information is sent via first signaling, and the first signaling includes at least one of semi-static signaling and dynamic signaling.

Optionally, the semi-static signaling includes at least one of broadcast signaling, multicast signaling, and radio resource control (RRC) signaling; and/or, the dynamic signaling includes at least one of media access control MAC layer signaling and layer 1 signaling.

Optionally, the first signaling includes at least one of cell-specific signaling and terminal-specific signaling.

Optionally, the at least one piece of discontinuous transmission configuration information configured by the network device for some or all of the N cells includes at least one piece of discontinuous transmission configuration information configured by the network device for the N cells; the first configuration information is used by the terminal for determining at least one of the activation period and the inactivation period of discontinuous transmission of the N cells.

Optionally, the at least one piece of discontinuous transmission configuration information configured by the network device for the N cells includes a plurality of discontinuous transmission configuration information configured by the network device for a first cell of the N cells. The transmitting module 1201s specifically configured to transmit second signaling to the terminal, wherein the second signaling includes second indication information, wherein the second indication information is used to indicate target discontinuous transmission configuration information corresponding to the first cell; the first configuration information and the second signaling are used by the terminal for determining at least one of the activation period and the inactivation period of discontinuous transmission of the first cell.

Optionally, the at least one piece of discontinuous transmission configuration information configured by the network device includes a plurality of pieces of discontinuous transmission configuration information configured by the network device, and the first association relationship includes association relationship between a second cell of the N cells and the corresponding discontinuous transmission configuration information; the first configuration information and the first association relationship are used by the terminal for determining at least one of the activation period and the inactivation period of discontinuous transmission of the second cell.

Optionally, the at least one piece of discontinuous transmission configuration information configured by the network device for some or all of the N cells includes at least one piece of discontinuous transmission configuration information configured by the network device for a third cell of the N cells, and the first indication information is configured to adjust the discontinuous transmission configuration information corresponding to the third cell; the first configuration information and the first indication information are used by the terminal for determining at least one of the activation period and the inactivation period of discontinuous transmission of the third cell.

Optionally, the first indication information is configured to indicate discontinuous transmission configuration information corresponding to the N cells; the first indication information is used by the terminal for determining at least one of the activation period and the inactivation period of discontinuous transmission of the N cells.

Optionally, the first indication information is sent via third signaling, and the third signaling includes at least one of the following: signaling carrying an SCell activation indication; signaling carrying an SCell deactivation indication; signaling carrying an SCell sleep indication; signaling dedicated for network energy-saving.

Optionally, the signaling dedicated for network energy-saving includes at least one of downlink control information DCI signaling, MAC signaling and RRC signaling.

Optionally, the at least one piece of discontinuous transmission configuration information configured by the network device for some or all of the N cells includes at least one piece of discontinuous transmission configuration information configured by the network device for some of the N cells; the first configuration information and the first association relationship are used by the terminal for determining at least one of the activation period and the inactivation period of discontinuous transmission of the N cells.

It should be noted here that the above-mentioned network device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product, and the computer software product is stored in a storage medium, including a number of instructions to enable a computer device (which can be a personal computer, a server, or a network device, etc.) or a processor (processor) to perform all or part of the steps of the method described in each embodiment of the present disclosure. The aforementioned storage medium includes: a U disk, a mobile hard disk, a read-only memory (Read-Only Memory, ROM), a random access memory (Random Access Memory, RAM), a disk or an optical disk and other media that can store program codes.

An embodiment of the present disclosure also provides a processor-readable storage medium, wherein the processor-readable storage medium stores a computer program, wherein the computer program is used to enable the processor to execute the uplink processing method on the terminal side provided by the embodiment of the present disclosure, or the computer program is used to enable the processor to execute the downlink service processing method on the network device side provided by the embodiment of the present disclosure, or the computer program is used to enable the processor to execute the paging processing method on the network node side provided by the embodiment of the present disclosure.

The processor-readable storage medium can be any available medium or data storage device that can be accessed by the processor, including but not limited to magnetic storage (such as floppy disks, hard disks, magnetic tapes, magneto-optical (MO)), etc.), optical storage (such as compact disks (CD), digital video discs (DVD), Blu-ray Discs (BD), high-definition versatile discs (HVD), etc.), and semiconductor memory (such as read-only memory (ROM), erasable programmable read-only memory (EPROM), electrically erasable programmable read only memory (EEPROM), non-volatile memory (NAND FLASH), solid-state disk (SSD)), etc.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage and optical storage, etc.) containing computer-usable program code.

The present disclosure is described with reference to the flowcharts and/or block diagrams of the method, device (system), and computer program product according to the embodiment of the present disclosure. It should be understood that each process and/or block in the flowchart and/or block diagram, as well as the combination of the processes and/or blocks in the flowcharts and/or block diagrams can be implemented by computer executable instructions. These computer executable instructions can be provided to a processor of a general-purpose computer, a special-purpose computer, an embedded processor or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (digital signal processor, DSP), or one or more field programmable gate arrays (FPGA), etc. For another example, when a module above is implemented in the form of a processing element scheduling program code, the processing element may be a general-purpose processor, such as a central processing unit (CPU) or other processor that can call program code. For another example, these modules can be integrated together and implemented in the form of a system-on-a-chip (SOC).

The terms "first", "second", etc. in the specification and claims of the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, which represents the inclusion of A alone, B alone, C alone, and A and B are present, B and C are present, A and C are present, and A, B and C are present 7 situations. Similarly, the use of "at least one of A and B" in the specification and claims should be understood as "A alone, B alone, or A and B are present".

## Claims

1. A method of determining discontinuous transmission, comprising:
determining at least one of an activation period and an inactivation period of discontinuous transmission of N cells based on first information by a terminal, wherein N is an integer greater than or equal to 1.

2. The method according to claim 1, wherein the first information comprises at least one of first configuration information, first association relationship, and first indication information;
wherein, the first configuration information comprises at least one piece of discontinuous transmission configuration information configured by a network device;
the first association relationship comprises association relationship between some or all of the N cells and the at least one piece of discontinuous transmission configuration information;
the first indication information is configured to adjust or indicate discontinuous transmission configuration information corresponding to some or all of the N cells.

3. The method according to claim 2, wherein the at least one piece of discontinuous transmission configuration information configured by the network device comprises at least one piece of discontinuous transmission configuration information configured by the network device for some or all of the N cells.

4. The method according to claim 2 or 3, wherein the at least one piece of discontinuous transmission configuration information comprises at least one of the following:
at least one piece of discontinuous transmission DTX configuration information;
at least one piece of discontinuous reception DRX configuration information.

5. The method according to claim 4, wherein the DTX configuration information and the DRX configuration information are configured independently; or
the DTX configuration information and the DRX configuration information are located in the same configuration information.

6. The method according to claim 4, wherein each DTX configuration information of the at least one piece of DTX configuration information comprises at least one set of DTX parameters; and/or,
each DRX configuration information of the at least one piece of DRX configuration information comprises at least one set of DRX parameters.

7. The method according to claim 6, wherein some or each of the N cells is associated with at least one set of the DTX parameters; or
some cell groups or each cell group of the N cells is associated with at least one set of the DTX parameters; or
some cells or each cell of the N cells is associated with at least one set of the DRX parameters; or
some cell groups or each cell group of the N cells is associated with at least one set of the DRX parameters.

8. The method according to any one of claims 1 to 3, wherein the N cells comprise at least one of the following:
a primary cell PCell;
at least one secondary cell SCell;
at least one cell group.

9. The method according to claim 2, wherein the at least one piece of discontinuous transmission configuration information is sent in at least one of a PCell, at least one SCell, and at least one Cell group.

10. The method according to claim 2, wherein a manner in which the terminal receives the first configuration information comprises at least one of the following:
that the terminal receives, in a PCell, second information in the first configuration information, wherein the second information is discontinuous transmission configuration information applied to at least one SCell;
that the terminal receives, in a PCell, third information in the first configuration information, wherein the third information is discontinuous transmission configuration information applied to at least one cell group;
that the terminal receives, in a first SCell, fourth information in the first configuration information, wherein the fourth information is discontinuous transmission configuration information applied to the first SCell;
that the terminal receives, in a second SCell, fifth information in the first configuration information, wherein the fifth information is discontinuous transmission configuration information applied to at least one SCell;
that the terminal receives, in some or all of the cells of the first cell group, sixth information in the first configuration information, wherein the sixth information is discontinuous transmission configuration information applied to the first cell group;
that the terminal receives, in some or all of the cells of the second cell group, seventh information in the first configuration information, wherein the seventh information is discontinuous transmission configuration information applied to at least one cell group;
that the terminal receives, in a third SCell, eighth information in the first configuration information, wherein the eighth information is discontinuous transmission configuration information applied to the PCell;
that the terminal receives ninth information in the first configuration information in the PCell, wherein the ninth information is discontinuous transmission configuration information applied to the PCell.

11. The method according to any one of claims 8 to 10, wherein the at least one cell group comprises at least one of a DRX group and an SCell group configured by a network device.

12. The method according to claim 2, wherein the first configuration information is sent via first signaling, and the first signaling comprises at least one of semi-static signaling and dynamic signaling.

13. The method according to claim 12, wherein the semi-static signaling comprises at least one of broadcast signaling, multicast signaling, and radio resource control (RRC) signaling;
and/or,
the dynamic signaling comprises at least one of media access control MAC layer signaling and layer 1 signaling.

14. The method according to claim 12, wherein the first signaling comprises at least one of cell-specific signaling and terminal-specific signaling.

15. The method according to claim 3, wherein the at least one piece of discontinuous transmission configuration information configured by the network device for some or all of the N cells comprises at least one piece of discontinuous transmission configuration information configured by the network device for the N cells;
the determining at least one of an activation period and an inactivation period of discontinuous transmission of N cells based on first information by the terminal comprises:
determining at least one of the activation period and the inactivation period of discontinuous transmission of the N cells based on the first configuration information by the terminal.

16. The method according to claim 15, wherein the at least one piece of discontinuous transmission configuration information configured by the network device for the N cells comprises a plurality of discontinuous transmission configuration information configured by the network device for a first cell of the N cells;
the method further comprises receiving second signaling from the network device by the terminal, wherein the second signaling comprises second indication information, wherein the second indication information is used to indicate target discontinuous transmission configuration information corresponding to the first cell;
determining at least one of the activation period and the inactivation period of discontinuous transmission of the N cells based on the first configuration information by the terminal comprises:
determining at least one of the activation period and the inactivation period of discontinuous transmission of the first cell based on the first configuration information and the second signaling by the terminal.

17. The method according to claim 2, wherein the at least one piece of discontinuous transmission configuration information configured by the network device comprises a plurality of pieces of discontinuous transmission configuration information configured by the network device, and the first association relationship comprises association relationship between the second cell of the N cells and the corresponding discontinuous transmission configuration information;
determining at least one of the activation period and the inactivation period of discontinuous transmission of the N cells based on the first information by the terminal comprises:
determining at least one of the activation period and the inactivation period of discontinuous transmission of the second cell based on the first configuration information and the first association relationship by the terminal.

18. The method according to claim 3, wherein the at least one piece of discontinuous transmission configuration information configured by the network device for some or all of the N cells comprises at least one piece of discontinuous transmission configuration information configured by the network device for a third cell of the N cells, and the first indication information is configured to adjust the discontinuous transmission configuration information corresponding to the third cell;
determining at least one of the activation period and the inactivation period of discontinuous transmission of the N cells based on the first information by the terminal comprises:
determining at least one of the activation period and the inactivation period of discontinuous transmission of the third cell based on the first configuration information and the first indication information by the first terminal.

19. The method according to claim 2, wherein the first indication information is configured to indicate discontinuous transmission configuration information corresponding to the N cells;
determining at least one of the activation period and the inactivation period of discontinuous transmission of the N cells based on the first information by the terminal comprises:
determining at least one of the activation period and the inactivation period of discontinuous transmission of the N cells based on the first indication information by the terminal.

20. The method according to claim 2, 18 or 19, wherein the first indication information is sent via third signaling, and the third signaling comprises at least one of the following:
signaling carrying an SCell activation indication;
signaling carrying an SCell deactivation indication;
signaling carrying an SCell sleep indication;
signaling dedicated for network energy-saving.

21. The method according to claim 20, wherein the signaling dedicated for network energy-saving comprises at least one of downlink control information DCI signaling, MAC signaling and RRC signaling.

22. The method according to claim 3, wherein the at least one piece of discontinuous transmission configuration information configured by the network device for some or all of the N cells comprises at least one piece of discontinuous transmission configuration information configured by the network device for some of the N cells;
determining at least one of the activation period and the inactivation period of discontinuous transmission of the N cells based on the first information by the terminal comprises:
determining at least one of the activation period and the inactivation period of discontinuous transmission of the N cells based on the first configuration information and the first association relationship by the terminal.

23. A method of configuring discontinuous transmission, comprising:
transmitting first information to a terminal by a network device, wherein the first information is used by the terminal for determining at least one of an activation period and an inactivation period of discontinuous transmission of N cells, wherein N is an integer greater than or equal to 1.

24. The method according to claim 23, wherein the first information comprises at least one of first configuration information, first association relationship, and first indication information;
wherein, the first configuration information comprises at least one piece of discontinuous transmission configuration information configured by a network device;
the first association relationship comprises association relationship between some or all of the N cells and the at least one piece of discontinuous transmission configuration information;
the first indication information is configured to adjust or indicate discontinuous transmission configuration information corresponding to some or all of the N cells.

25. The method according to claim 24, wherein the at least one piece of discontinuous transmission configuration information configured by the network device comprises at least one piece of discontinuous transmission configuration information configured by the network device for some or all of the N cells.

26. The method according to claim 24 or 25, wherein the at least one piece of discontinuous transmission configuration information comprises at least one of the following:
at least one piece of discontinuous transmission DTX configuration information;
at least one piece of discontinuous reception DRX configuration information.

27. The method according to claim 26, wherein the DTX configuration information and the DRX configuration information are configured independently; or
the DTX configuration information and the DRX configuration information are located in the same configuration information.

28. The method according to claim 26, wherein each DTX configuration information of the at least one piece of DTX configuration information comprises at least one set of DTX parameters; and/or,
each DRX configuration information of the at least one piece of DRX configuration information comprises at least one set of DRX parameters.

29. The method according to claim 28, wherein some or each of the N cells is associated with at least one set of the DTX parameters; or
some cell groups or each cell group of the N cells is associated with at least one set of the DTX parameters; or
some cells or each cell of the N cells is associated with at least one set of the DRX parameters; or
some cell groups or each cell group of the N cells is associated with at least one set of the DRX parameters.

30. The method according to any one of claims 23 to 25, wherein the N cells comprise at least one of the following:
a primary cell PCell;
at least one secondary cell SCell;
at least one cell group.

31. The method according to claim 24, wherein the at least one piece of discontinuous transmission configuration information is sent in at least one of a PCell, at least one SCell, and at least one cell group.

32. The method according to claim 24, wherein a manner in which the network device transmits the first configuration information comprises at least one of the following:
that the network device transmits, in a PCell, second information in the first configuration information, wherein the second information is discontinuous transmission configuration information applied to at least one SCell;
that the network device transmits, in a PCell, third information in the first configuration information, wherein the third information is discontinuous transmission configuration information applied to at least one cell group;
that the network device transmits, in a first SCell, fourth information in the first configuration information, wherein the fourth information is discontinuous transmission configuration information applied to the first SCell;
that the network device transmits, in a second SCell, fifth information in the first configuration information, wherein the fifth information is discontinuous transmission configuration information applied to at least one SCell;
that the network device transmits, in some or all of the cells of the first cell group, sixth information in the first configuration information, wherein the sixth information is discontinuous transmission configuration information applied to the first cell group;
that the network device transmits, in some or all of the cells of the second cell group, seventh information in the first configuration information, wherein the seventh information is discontinuous transmission configuration information applied to at least one cell group;
that the network device transmits, in a third SCell, eighth information in the first configuration information, wherein the eighth information is discontinuous transmission configuration information applied to the PCell;
that the network device transmits ninth information in the first configuration information in the PCell, wherein the ninth information is discontinuous transmission configuration information applied to the PCell.

33. The method according to any one of claims 30 to 32, wherein the at least one cell group comprises at least one of a DRX group and an SCell group configured by a network device.

34. The method according to claim 24, wherein the first configuration information is sent via first signaling, and the first signaling comprises at least one of semi-static signaling and dynamic signaling.

35. The method according to claim 34, wherein the semi-static signaling comprises at least one of broadcast signaling, multicast signaling, and radio resource control (RRC) signaling;
and/or,
the dynamic signaling comprises at least one of media access control MAC layer signaling and layer 1 signaling.

36. The method according to claim 34, wherein the first signaling comprises at least one of cell-specific signaling and terminal-specific signaling.

37. The method according to claim 25, wherein the at least one piece of discontinuous transmission configuration information configured by the network device for some or all of the N cells comprises at least one piece of discontinuous transmission configuration information configured by the network device for the N cells;
the first configuration information is used by the terminal for determining at least one of the activation period and the inactivation period of discontinuous transmission of the N cells.

38. The method according to claim 37, wherein the at least one piece of discontinuous transmission configuration information configured by the network device for the N cells comprises a plurality of discontinuous transmission configuration information configured by the network device for a first cell of the N cells;
the method further comprises transmitting second signaling to the terminal by the network device, wherein the second signaling comprises second indication information, wherein the second indication information is used to indicate target discontinuous transmission configuration information corresponding to the first cell;
the first configuration information and the second signaling are used by the terminal for determining at least one of the activation period and the inactivation period of discontinuous transmission of the first cell.

39. The method according to claim 24, wherein the at least one piece of discontinuous transmission configuration information configured by the network device comprises a plurality of pieces of discontinuous transmission configuration information configured by the network device, and the first association relationship comprises association relationship between a second cell of the N cells and the corresponding discontinuous transmission configuration information;
the first configuration information and the first association relationship are used by the terminal for determining at least one of the activation period and the inactivation period of discontinuous transmission of the second cell.

40. The method according to claim 25, wherein the at least one piece of discontinuous transmission configuration information configured by the network device for some or all of the N cells comprises at least one piece of discontinuous transmission configuration information configured by the network device for a third cell of the N cells, and the first indication information is configured to adjust the discontinuous transmission configuration information corresponding to the third cell;
the first configuration information and the first indication information are used by the terminal for determining at least one of the activation period and the inactivation period of discontinuous transmission of the third cell.

41. The method according to claim 24, wherein the first indication information is configured to indicate discontinuous transmission configuration information corresponding to the N cells;
the first indication information is used by the terminal for determining at least one of the activation period and the inactivation period of discontinuous transmission of the N cells.

42. The method according to claim 24, 41, or 42, wherein the first indication information is sent via third signaling, and the third signaling comprises at least one of the following:
signaling carrying an SCell activation indication;
signaling carrying an SCell deactivation indication;
signaling carrying an SCell sleep indication;
signaling dedicated for network energy-saving.

43. The method according to claim 42, wherein the signaling dedicated for network energy-saving comprises at least one of downlink control information DCI signaling, MAC signaling and RRC signaling.

44. The method according to claim 25, wherein the at least one piece of discontinuous transmission configuration information configured by the network device for some or all of the N cells comprises at least one piece of discontinuous transmission configuration information configured by the network device for some of the N cells;
the first configuration information and the first association relationship are used by the terminal for determining at least one of the activation period and the inactivation period of discontinuous transmission of the N cells.

45. A terminal, comprising a memory, a transceiver and a processor, wherein, the memory is configured for storing a computer program, the transceiver is configured for transmitting and receiving data under the control of the processor; and the processor is configured for reading the computer program in the memory and performing the following operations:
determining at least one of an activation period and an inactivation period of discontinuous transmission of N cells based on first information, wherein N is an integer greater than or equal to 1.

46. The terminal according to claim 45, wherein the first information comprises at least one of first configuration information, first association relationship, and first indication information;
wherein, the first configuration information comprises at least one piece of discontinuous transmission configuration information configured by a network device;
the first association relationship comprises association relationship between some or all of the N cells and the at least one piece of discontinuous transmission configuration information;
the first indication information is configured to adjust or indicate discontinuous transmission configuration information corresponding to some or all of the N cells.

47. The terminal according to claim 46, wherein the at least one piece of discontinuous transmission configuration information configured by the network device comprises at least one piece of discontinuous transmission configuration information configured by the network device for some or all of the N cells.

48. The terminal according to claim 46 or 47, wherein the at least one piece of discontinuous transmission configuration information comprises at least one of the following:
at least one piece of discontinuous transmission DTX configuration information;
at least one piece of discontinuous reception DRX configuration information.

49. The terminal according to claim 48, wherein the DTX configuration information and the DRX configuration information are configured independently; or
the DTX configuration information and the DRX configuration information are located in the same configuration information.

50. The terminal according to claim 48, wherein each DTX configuration information of the at least one piece of DTX configuration information comprises at least one set of DTX parameters; and/or,
each DRX configuration information of the at least one piece of DRX configuration information comprises at least one set of DRX parameters.

51. The terminal according to claim 50, wherein some or each of the N cells is associated with at least one set of the DTX parameters; or
some cell groups or each cell group of the N cells is associated with at least one set of the DTX parameters; or
some cells or each cell of the N cells is associated with at least one set of the DRX parameters; or
some cell groups or each cell group of the N cells is associated with at least one set of the DRX parameters.

52. The terminal according to any one of claims 45 to 47, wherein the N cells comprise at least one of the following:
a primary cell PCell;
at least one secondary cell SCell;
at least one cell group.

53. The terminal according to claim 46, wherein the at least one piece of discontinuous transmission configuration information is sent in at least one of a PCell, at least one SCell, and at least one Cell group.

54. The terminal according to claim 46, wherein the transceiver is configured for at least one of the following:
receiving, in a PCell, second information in the first configuration information, wherein the second information is discontinuous transmission configuration information applied to at least one SCell;
receiving, in a PCell, third information in the first configuration information, wherein the third information is discontinuous transmission configuration information applied to at least one cell group;
receiving, in a first SCell, fourth information in the first configuration information, wherein the fourth information is discontinuous transmission configuration information applied to the first SCell;
receiving, in a second SCell, fifth information in the first configuration information, wherein the fifth information is discontinuous transmission configuration information applied to at least one SCell;
receiving, in some or all of the cells of the first cell group, sixth information in the first configuration information, wherein the sixth information is discontinuous transmission configuration information applied to the first cell group;
receiving, in some or all of the cells of the second cell group, seventh information in the first configuration information, wherein the seventh information is discontinuous transmission configuration information applied to at least one cell group;
receiving, in a third SCell, eighth information in the first configuration information, wherein the eighth information is discontinuous transmission configuration information applied to the PCell;
receiving ninth information in the first configuration information in the PCell, wherein the ninth information is discontinuous transmission configuration information applied to the PCell.

55. The terminal according to any one of claims 52 to 54, wherein the at least one cell group comprises at least one of a DRX group and an SCell group configured by a network device.

56. The terminal according to claim 46, wherein the first configuration information is sent via first signaling, and the first signaling comprises at least one of semi-static signaling and dynamic signaling.

57. The terminal according to claim 56, wherein the semi-static signaling comprises at least one of broadcast signaling, multicast signaling, and radio resource control (RRC) signaling;
and/or,
the dynamic signaling comprises at least one of media access control MAC layer signaling and layer 1 signaling.

58. The terminal according to claim 56, wherein the first signaling comprises at least one of cell-specific signaling and terminal-specific signaling.

59. The terminal according to claim 47, wherein the at least one piece of discontinuous transmission configuration information configured by the network device for some or all of the N cells comprises at least one piece of discontinuous transmission configuration information configured by the network device for the N cells;
the processor is further configured for:
determining at least one of the activation period and the inactivation period of discontinuous transmission of the N cells based on the first configuration information.

60. The terminal according to claim 58, wherein the at least one piece of discontinuous transmission configuration information configured by the network device for the N cells comprises a plurality of discontinuous transmission configuration information configured by the network device for a first cell of the N cells;
the transceiver is further configured for:
receiving second signaling from the network device, wherein the second signaling comprises second indication information, wherein the second indication information is used to indicate target discontinuous transmission configuration information corresponding to the first cell;
the processor is further configured for:
determining at least one of the activation period and the inactivation period of discontinuous transmission of the first cell based on the first configuration information and the second signaling.

61. The terminal according to claim 46, wherein the at least one piece of discontinuous transmission configuration information configured by the network device comprises a plurality of pieces of discontinuous transmission configuration information configured by the network device, and the first association relationship comprises association relationship between the second cell of the N cells and the corresponding discontinuous transmission configuration information; the processor is further configured for:
determining at least one of the activation period and the inactivation period of discontinuous transmission of the second cell based on the first configuration information and the first association relationship.

62. The terminal according to claim 47, wherein the at least one piece of discontinuous transmission configuration information configured by the network device for some or all of the N cells comprises at least one piece of discontinuous transmission configuration information configured by the network device for a third cell of the N cells, and the first indication information is configured to adjust the discontinuous transmission configuration information corresponding to the third cell;
the processor is further configured for:
determining at least one of the activation period and the inactivation period of discontinuous transmission of the third cell based on the first configuration information and the first indication information.

63. The terminal according to claim 46, wherein the first indication information is configured to indicate discontinuous transmission configuration information corresponding to the N cells;
the processor is further configured for:
determining at least one of the activation period and the inactivation period of discontinuous transmission of the N cells based on the first indication information.

64. The terminal according to claim 46, 62, or 63, wherein the first indication information is sent via third signaling, and the third signaling comprises at least one of the following:
signaling carrying an SCell activation indication;
signaling carrying an SCell deactivation indication;
signaling carrying an SCell sleep indication;
signaling dedicated for network energy-saving.

65. The terminal according to claim 64, wherein the signaling dedicated for network energy-saving comprises at least one of downlink control information DCI signaling, MAC signaling and RRC signaling.

66. The terminal according to claim 47, wherein the at least one piece of discontinuous transmission configuration information configured by the network device for some or all of the N cells comprises at least one piece of discontinuous transmission configuration information configured by the network device for some of the N cells;
the processor is further configured for:
determining at least one of the activation period and the inactivation period of discontinuous transmission of the N cells based on the first configuration information and the first association relationship.

67. A terminal, comprising:
a determination module configured to determine at least one of an activation period and an inactivation period of discontinuous transmission of N cells based on first information, wherein N is an integer greater than or equal to 1.

68. The terminal according to claim 67, wherein the first information comprises at least one of first configuration information, first association relationship, and first indication information;
wherein, the first configuration information comprises at least one piece of discontinuous transmission configuration information configured by a network device;
the first association relationship comprises association relationship between some or all of the N cells and the at least one piece of discontinuous transmission configuration information;
the first indication information is configured to adjust or indicate discontinuous transmission configuration information corresponding to some or all of the N cells.

69. The terminal according to claim 68, wherein the at least one piece of discontinuous transmission configuration information configured by the network device comprises at least one piece of discontinuous transmission configuration information configured by the network device for some or all of the N cells.

70. The terminal according to claim 68 or 69, wherein the at least one piece of discontinuous transmission configuration information comprises at least one of the following:
at least one piece of discontinuous transmission DTX configuration information;
at least one piece of discontinuous reception DRX configuration information.

71. The terminal according to claim 70, wherein the DTX configuration information and the DRX configuration information are configured independently; or
the DTX configuration information and the DRX configuration information are located in the same configuration information.

72. The terminal according to claim 70, wherein each DTX configuration information of the at least one piece of DTX configuration information comprises at least one set of DTX parameters; and/or,
each DRX configuration information of the at least one piece of DRX configuration information comprises at least one set of DRX parameters.

73. The terminal according to claim 72, wherein some or each of the N cells is associated with at least one set of the DTX parameters; or
some cell groups or each cell group of the N cells is associated with at least one set of the DTX parameters; or
some cells or each cell of the N cells is associated with at least one set of the DRX parameters; or
some cell groups or each cell group of the N cells is associated with at least one set of the DRX parameters.

74. The terminal according to any one of claims 67 to 69, wherein the N cells comprise at least one of the following:
a primary cell PCell;
at least one secondary cell SCell;
at least one cell group.

75. The terminal according to claim 68, wherein the at least one piece of discontinuous transmission configuration information is sent in at least one of a PCell, at least one SCell, and at least one Cell group.

76. The terminal according to claim 68, further comprising a first receiving module, configured to:
receive, in a PCell, second information in the first configuration information, wherein the second information is discontinuous transmission configuration information applied to at least one SCell;
receive, in a PCell, third information in the first configuration information, wherein the third information is discontinuous transmission configuration information applied to at least one cell group;
receive, in a first SCell, fourth information in the first configuration information, wherein the fourth information is discontinuous transmission configuration information applied to the first SCell;
receive, in a second SCell, fifth information in the first configuration information, wherein the fifth information is discontinuous transmission configuration information applied to at least one SCell;
receive, in some or all of the cells of the first cell group, sixth information in the first configuration information, wherein the sixth information is discontinuous transmission configuration information applied to the first cell group;
receive, in some or all of the cells of the second cell group, seventh information in the first configuration information, wherein the seventh information is discontinuous transmission configuration information applied to at least one cell group;
receive, in a third SCell, eighth information in the first configuration information, wherein the eighth information is discontinuous transmission configuration information applied to the PCell;
receive ninth information in the first configuration information in the PCell, wherein the ninth information is discontinuous transmission configuration information applied to the PCell.

77. The terminal according to any one of claims 74 to 76, wherein the at least one cell group comprises at least one of a DRX group and an SCell group configured by a network device.

78. The terminal according to claim 68, wherein the first configuration information is sent via first signaling, and the first signaling comprises at least one of semi-static signaling and dynamic signaling.

79. The terminal according to claim 78, wherein the semi-static signaling comprises at least one of broadcast signaling, multicast signaling, and radio resource control (RRC) signaling;
and/or,
the dynamic signaling comprises at least one of media access control MAC layer signaling and layer 1 signaling.

80. The terminal according to claim 78, wherein the first signaling comprises at least one of cell-specific signaling and terminal-specific signaling.

81. The terminal according to claim 69, wherein the at least one piece of discontinuous transmission configuration information configured by the network device for some or all of the N cells comprises at least one piece of discontinuous transmission configuration information configured by the network device for the N cells;
the determination module is specifically configured to determine at least one of the activation period and the inactivation period of discontinuous transmission of the N cells based on the first configuration information by the terminal.

82. The terminal according to claim 81, wherein the at least one piece of discontinuous transmission configuration information configured by the network device for the N cells comprises a plurality of discontinuous transmission configuration information configured by the network device for a first cell of the N cells;
the terminal further comprises a second receiving module, configured to receive second signaling from the network device, wherein the second signaling comprises second indication information, wherein the second indication information is used to indicate target discontinuous transmission configuration information corresponding to the first cell;
the determination module is specifically configured to determine at least one of the activation period and the inactivation period of discontinuous transmission of the first cell based on the first configuration information and the second signaling.

83. The terminal according to claim 68, wherein the at least one piece of discontinuous transmission configuration information configured by the network device comprises a plurality of pieces of discontinuous transmission configuration information configured by the network device, and the first association relationship comprises association relationship between the second cell of the N cells and the corresponding discontinuous transmission configuration information;
the determination module is specifically configured to determine at least one of the activation period and the inactivation period of discontinuous transmission of the second cell based on the first configuration information and the first association relationship.

84. The terminal according to claim 69, wherein the at least one piece of discontinuous transmission configuration information configured by the network device for some or all of the N cells comprises at least one piece of discontinuous transmission configuration information configured by the network device for a third cell of the N cells, and the first indication information is configured to adjust the discontinuous transmission configuration information corresponding to the third cell;
the determination module is specifically configured to determine at least one of the activation period and the inactivation period of discontinuous transmission of the third cell based on the first configuration information and the first indication information.

85. The terminal according to claim 68, wherein the first indication information is configured to indicate discontinuous transmission configuration information corresponding to the N cells;
the determination module is specifically configured to determine at least one of the activation period and the inactivation period of discontinuous transmission of the N cells based on the first indication information.

86. The terminal according to claim 68, 84, or 85, wherein the first indication information is sent via third signaling, and the third signaling comprises at least one of the following:
signaling carrying an SCell activation indication;
signaling carrying an SCell deactivation indication;
signaling carrying an SCell sleep indication;
signaling dedicated for network energy-saving.

87. The terminal according to claim 86, wherein the signaling dedicated for network energy-saving comprises at least one of downlink control information DCI signaling, MAC signaling and RRC signaling.

88. The terminal according to claim 69, wherein the at least one piece of discontinuous transmission configuration information configured by the network device for some or all of the N cells comprises at least one piece of discontinuous transmission configuration information configured by the network device for some of the N cells;
the determination module is specifically configured to determine at least one of the activation period and the inactivation period of discontinuous transmission of the N cells based on the first configuration information and the first association relationship.

89. A network device, comprising a memory, a transceiver and a processor, wherein, the memory is configured for storing a computer program; the transceiver is configured for transmitting and receiving data under the control of the processor; and the processor is configured for reading the computer program in the memory and performing the following operations:
transmitting first information to a terminal, wherein the first information is used by the terminal for determining at least one of an activation period and an inactivation period of discontinuous transmission of N cells, wherein N is an integer greater than or equal to 1.

90. The network device according to claim 89, wherein the first information comprises at least one of first configuration information, first association relationship, and first indication information;
wherein, the first configuration information comprises at least one piece of discontinuous transmission configuration information configured by a network device;
the first association relationship comprises association relationship between some or all of the N cells and the at least one piece of discontinuous transmission configuration information;
the first indication information is configured to adjust or indicate discontinuous transmission configuration information corresponding to some or all of the N cells.

91. The network device according to claim 90, wherein the at least one piece of discontinuous transmission configuration information configured by the network device comprises at least one piece of discontinuous transmission configuration information configured by the network device for some or all of the N cells.

92. The network device according to claim 90 or 91, wherein the at least one piece of discontinuous transmission configuration information comprises at least one of the following:
at least one piece of discontinuous transmission DTX configuration information;
at least one piece of discontinuous reception DRX configuration information.

93. The network device according to claim 92, wherein the DTX configuration information and the DRX configuration information are configured independently; or
the DTX configuration information and the DRX configuration information are located in the same configuration information.

94. The network device according to claim 92, wherein each DTX configuration information of the at least one piece of DTX configuration information comprises at least one set of DTX parameters; and/or,
each DRX configuration information of the at least one piece of DRX configuration information comprises at least one set of DRX parameters.

95. The network device according to claim 94, wherein some or each of the N cells is associated with at least one set of the DTX parameters; or
some cell groups or each cell group of the N cells is associated with at least one set of the DTX parameters; or
some cells or each cell of the N cells is associated with at least one set of the DRX parameters; or
some cell groups or each cell group of the N cells is associated with at least one set of the DRX parameters.

96. The network device according to any one of claims 89 to 91, wherein the N cells comprise at least one of the following:
a primary cell PCell;
at least one secondary cell SCell;
at least one cell group.

97. The network device according to claim 90, wherein the at least one piece of discontinuous transmission configuration information is sent in at least one of a PCell, at least one SCell, and at least one cell group.

98. The network device according to claim 90, wherein the processor or the transceiver is configured to at least one of:
transmit, in a PCell, second information in the first configuration information, wherein the second information is discontinuous transmission configuration information applied to at least one SCell;
transmit, in a PCell, third information in the first configuration information, wherein the third information is discontinuous transmission configuration information applied to at least one cell group;
transmit, in a first SCell, fourth information in the first configuration information, wherein the fourth information is discontinuous transmission configuration information applied to the first SCell;
transmit, in a second SCell, fifth information in the first configuration information, wherein the fifth information is discontinuous transmission configuration information applied to at least one SCell;
transmit, in some or all of the cells of the first cell group, sixth information in the first configuration information, wherein the sixth information is discontinuous transmission configuration information applied to the first cell group;
transmit, in some or all of the cells of the second cell group, seventh information in the first configuration information, wherein the seventh information is discontinuous transmission configuration information applied to at least one cell group;
transmit, in a third SCell, eighth information in the first configuration information, wherein the eighth information is discontinuous transmission configuration information applied to the PCell;
transmit ninth information in the first configuration information in the PCell, wherein the ninth information is discontinuous transmission configuration information applied to the PCell.

99. The network device according to any one of claims 96 to 98, wherein the at least one cell group comprises at least one of a DRX group and an SCell group configured by a network device.

100. The network device according to claim 90, wherein the first configuration information is sent via first signaling, and the first signaling comprises at least one of semi-static signaling and dynamic signaling.

101. The network device according to claim 100, wherein the semi-static signaling comprises at least one of broadcast signaling, multicast signaling, and radio resource control (RRC) signaling;
and/or,
the dynamic signaling comprises at least one of media access control MAC layer signaling and layer 1 signaling.

102. The network device according to claim 100, wherein the first signaling comprises at least one of cell-specific signaling and terminal-specific signaling.

103. The network device according to claim 101, wherein the at least one piece of discontinuous transmission configuration information configured by the network device for some or all of the N cells comprises at least one piece of discontinuous transmission configuration information configured by the network device for the N cells;
the first configuration information is used by the terminal for determining at least one of the activation period and the inactivation period of discontinuous transmission of the N cells.

104. The network device according to claim 103, wherein the at least one piece of discontinuous transmission configuration information configured by the network device for the N cells comprises a plurality of discontinuous transmission configuration information configured by the network device for a first cell of the N cells;
the processor or the transceiver is further configured to:
transmit second signaling to the terminal, wherein the second signaling comprises second indication information, wherein the second indication information is used to indicate target discontinuous transmission configuration information corresponding to the first cell;
the first configuration information and the second signaling are used by the terminal for determining at least one of the activation period and the inactivation period of discontinuous transmission of the first cell.

105. The network device according to claim 90, wherein the at least one piece of discontinuous transmission configuration information configured by the network device comprises a plurality of pieces of discontinuous transmission configuration information configured by the network device, and the first association relationship comprises association relationship between a second cell of the N cells and the corresponding discontinuous transmission configuration information;
the first configuration information and the first association relationship are used by the terminal for determining at least one of the activation period and the inactivation period of discontinuous transmission of the second cell.

106. The network device according to claim 91, wherein the at least one piece of discontinuous transmission configuration information configured by the network device for some or all of the N cells comprises at least one piece of discontinuous transmission configuration information configured by the network device for a third cell of the N cells, and the first indication information is configured to adjust the discontinuous transmission configuration information corresponding to the third cell;
the first configuration information and the first indication information are used by the terminal for determining at least one of the activation period and the inactivation period of discontinuous transmission of the third cell.

107. The network device according to claim 90, wherein the first indication information is configured to indicate discontinuous transmission configuration information corresponding to the N cells;
the first indication information is used by the terminal for determining at least one of the activation period and the inactivation period of discontinuous transmission of the N cells.

108. The network device according to claim 90, 106, or 107, wherein the first indication information is sent via third signaling, and the third signaling comprises at least one of the following:
signaling carrying an SCell activation indication;
signaling carrying an SCell deactivation indication;
signaling carrying an SCell sleep indication;
signaling dedicated for network energy-saving.

109. The network device according to claim 108, wherein the signaling dedicated for network energy-saving comprises at least one of downlink control information DCI signaling, MAC signaling and RRC signaling.

110. The network device according to claim 91, wherein the at least one piece of discontinuous transmission configuration information configured by the network device for some or all of the N cells comprises at least one piece of discontinuous transmission configuration information configured by the network device for some of the N cells;
the first configuration information and the first association relationship are used by the terminal for determining at least one of the activation period and the inactivation period of discontinuous transmission of the N cells.

111. A network device, comprising:
a transmitting module, configured to transmit first information to a terminal, wherein the first information is used by the terminal for determining at least one of an activation period and an inactivation period of discontinuous transmission of N cells, wherein N is an integer greater than or equal to 1.

112. The network device according to claim 111, wherein the first information comprises at least one of first configuration information, first association relationship, and first indication information;
wherein, the first configuration information comprises at least one piece of discontinuous transmission configuration information configured by a network device;
the first association relationship comprises association relationship between some or all of the N cells and the at least one piece of discontinuous transmission configuration information;
the first indication information is configured to adjust or indicate discontinuous transmission configuration information corresponding to some or all of the N cells.

113. The network device according to claim 112, wherein the at least one piece of discontinuous transmission configuration information configured by the network device comprises at least one piece of discontinuous transmission configuration information configured by the network device for some or all of the N cells.

114. The network device according to claim 112 or 113, wherein the at least one piece of discontinuous transmission configuration information comprises at least one of the following:
at least one piece of discontinuous transmission DTX configuration information;
at least one piece of discontinuous reception DRX configuration information.

115. The network device according to claim 114, wherein the DTX configuration information and the DRX configuration information are configured independently; or
the DTX configuration information and the DRX configuration information are located in the same configuration information.

116. The network device according to claim 114, wherein each DTX configuration information of the at least one piece of DTX configuration information comprises at least one set of DTX parameters; and/or,
each DRX configuration information of the at least one piece of DRX configuration information comprises at least one set of DRX parameters.

117. The network device according to claim 116, wherein some or each of the N cells is associated with at least one set of the DTX parameters; or
some cell groups or each cell group of the N cells is associated with at least one set of the DTX parameters; or
some cells or each cell of the N cells is associated with at least one set of the DRX parameters; or
some cell groups or each cell group of the N cells is associated with at least one set of the DRX parameters.

118. The network device according to claims 111 to 113, wherein the N cells comprise at least one of the following:
a primary cell PCell;
at least one secondary cell SCell;
at least one cell group.

119. The network device according to claim 112, wherein the at least one piece of discontinuous transmission configuration information is sent in at least one of a PCell, at least one SCell, and at least one cell group.

120. The network device according to claim 112, wherein the transmitting module is specifically configured to perform at least one of the following:
transmitting, in a PCell, second information in the first configuration information, wherein the second information is discontinuous transmission configuration information applied to at least one SCell;
transmitting, in a PCell, third information in the first configuration information, wherein the third information is discontinuous transmission configuration information applied to at least one cell group;
transmitting, in a first SCell, fourth information in the first configuration information, wherein the fourth information is discontinuous transmission configuration information applied to the first SCell;
transmitting, in a second SCell, fifth information in the first configuration information, wherein the fifth information is discontinuous transmission configuration information applied to at least one SCell;
transmitting, in some or all of the cells of the first cell group, sixth information in the first configuration information, wherein the sixth information is discontinuous transmission configuration information applied to the first cell group;
transmitting, in some or all of the cells of the second cell group, seventh information in the first configuration information, wherein the seventh information is discontinuous transmission configuration information applied to at least one cell group;
transmitting, in a third SCell, eighth information in the first configuration information, wherein the eighth information is discontinuous transmission configuration information applied to the PCell;
transmitting ninth information in the first configuration information in the PCell, wherein the ninth information is discontinuous transmission configuration information applied to the PCell.

121. The network device according to any one of claims 118 to 120, wherein the at least one cell group comprises at least one of a DRX group and an SCell group configured by a network device.

122. The network device according to claim 112, wherein the first configuration information is sent via first signaling, and the first signaling comprises at least one of semi-static signaling and dynamic signaling.

123. The network device according to claim 122, wherein the semi-static signaling comprises at least one of broadcast signaling, multicast signaling, and radio resource control (RRC) signaling;
and/or,
the dynamic signaling comprises at least one of media access control MAC layer signaling and layer 1 signaling.

124. The network device according to claim 122, wherein the first signaling comprises at least one of cell-specific signaling and terminal-specific signaling.

125. The network device according to claim 123, wherein the at least one piece of discontinuous transmission configuration information configured by the network device for some or all of the N cells comprises at least one piece of discontinuous transmission configuration information configured by the network device for the N cells;
the first configuration information is used by the terminal for determining at least one of the activation period and the inactivation period of discontinuous transmission of the N cells.

126. The network device according to claim 125, wherein the at least one piece of discontinuous transmission configuration information configured by the network device for the N cells comprises a plurality of discontinuous transmission configuration information configured by the network device for a first cell of the N cells;
the transmitting module is specifically configured to transmit second signaling to the terminal, wherein the second signaling comprises second indication information, wherein the second indication information is used to indicate target discontinuous transmission configuration information corresponding to the first cell;
the first configuration information and the second signaling are used by the terminal for determining at least one of the activation period and the inactivation period of discontinuous transmission of the first cell.

127. The network device according to claim 112, wherein the at least one piece of discontinuous transmission configuration information configured by the network device comprises a plurality of pieces of discontinuous transmission configuration information configured by the network device, and the first association relationship comprises association relationship between a second cell of the N cells and the corresponding discontinuous transmission configuration information;
the first configuration information and the first association relationship are used by the terminal for determining at least one of the activation period and the inactivation period of discontinuous transmission of the second cell.

128. The network device according to claim 113, wherein the at least one piece of discontinuous transmission configuration information configured by the network device for some or all of the N cells comprises at least one piece of discontinuous transmission configuration information configured by the network device for a third cell of the N cells, and the first indication information is configured to adjust the discontinuous transmission configuration information corresponding to the third cell;
the first configuration information and the first indication information are used by the terminal for determining at least one of the activation period and the inactivation period of discontinuous transmission of the third cell.

129. The network device according to claim 112, wherein the first indication information is configured to indicate discontinuous transmission configuration information corresponding to the N cells;
the first indication information is used by the terminal for determining at least one of the activation period and the inactivation period of discontinuous transmission of the N cells.

130. The network device according to claims 112, 128, or 129, whereinthe first indication information is sent via third signaling, and the third signaling comprises at least one of the following:
signaling carrying an SCell activation indication;
signaling carrying an SCell deactivation indication;
signaling carrying an SCell sleep indication;
signaling dedicated for network energy-saving.

131. The network device according to claim 130, wherein the signaling dedicated for network energy-saving comprises at least one of downlink control information DCI signaling, MAC signaling and RRC signaling.

132. The network device according to claim 113, wherein the at least one piece of discontinuous transmission configuration information configured by the network device for some or all of the N cells comprises at least one piece of discontinuous transmission configuration information configured by the network device for some of the N cells;
the first configuration information and the first association relationship are used by the terminal for determining at least one of the activation period and the inactivation period of discontinuous transmission of the N cells.

133. A processor-readable storage medium storing a computer program, wherein the computer program is used to cause a processor to execute the method of determining discontinuous transmission according to any one of claims 1 to 22, or the computer program is used to cause a processor to execute the method of determining discontinuous transmission according to any one of claims 23 to 44.
